# EUROPEAN PATENT SPECIFICATION

(11) **EP 4 389 457 B1**
(45) Date of publication and mention of the grant of the patent: **04.06.2025**
(21) Application number: 23215407.0
(22) Date of filing: 11.12.2023
(51) Int. Cl.: B60C 1/00, B60C 11/00, B60C 11/03, C08L 7/00

(54) **HEAVY-DUTY TIRE**
SCHWERLASTREIFEN
PNEU POUR POIDS LOURDS

(30) Priority: 21.12.2022 JP 2022204867
(43) Date of publication of application: 26.06.2024
(73) Proprietor: Sumitomo Rubber Industries, Ltd., Kobe-shi, Hyogo 651-0072 (JP)
(72) Inventor: GONDO, Satoshi, Kobe-shi, Hyogo, 651-0072 (JP)
(74) Representative: Manitz Finsterwald Patent- und Rechtsanwaltspartnerschaft mbB

(56) References cited:
- EP-A1- 3 950 381
- WO-A1-2021/215279
- JP-A- 2022 086 476

## Description

### TECHNICAL FIELD

The present invention relates to a heavy-duty tire.

### BACKGROUND OF THE INVENTION

JP H07-61214 A describes that a tread part of a tire is produced to have a two-layer structure of a base rubber located inside in a tire radial direction and a cap rubber located on its outer side in the tire radial direction (a so-called cap/base structure) and a rubber composition with a small loss tangent (tan δ) is applied to the base rubber, thereby improving steering stability and fuel efficiency of the tire.

Attention is also drawn to the disclosure of WO2021/215279 A1, JP2022086476-A and EP3950381-A1.

### SUMMARY OF THE INVENTION

In a case of a tire as described above, a loss tangent, tan δ, of the cap rubber layer is high, and thus wet grip performance in mint condition is high. However, the cap rubber layer is subject to thermal aging due to an influence of self-heat generation and hardens as running continues, and thus rigidity of a tread grounding surface becomes high, followability to a road surface is lost, and there is a concern that wet grip performance may deteriorate.

It is an object of the present invention to provide a heavy-duty tire capable of improving wet grip performance after abrasion.

The present invention relates to a heavy-duty tire comprising a tread part, wherein the tread part comprises a plurality of circumferential grooves extending continuously in a tire circumferential direction, wherein the tread part at least comprises a first layer constituting a tread surface, a second layer adjacent to the inner side of the first layer in a radial direction, and a third layer present on the inner side of the second layer in the radial direction, wherein each of the first layer, the second layer, and the third layer is composed of a rubber composition comprising a rubber component and a filler, and wherein Dt is 0.80 or more, t1/H is 0.90 or less, S1/S2 is less than 1.0, and a product (S2×Dt) of S2 and Dt is greater than 10.0, where a tire outer diameter is referred to as Dt, in m, a thickness of the first layer is referred to as t1, in mm, a groove depth at a deepest part of the circumferential grooves is referred to as H, in mm, a content of silica based on 100 parts by mass of a rubber component in a rubber composition constituting the first layer is referred to as S1, in parts by mass, and a content of silica based on 100 parts by mass of a rubber component in a rubber composition constituting the second layer is referred to as S2, in parts by mass.

According to the present invention, wet grip performance of a heavy-duty tire after abrasion can be improved.

### BRIEF DESCRIPTION OF THE DRAWINGS

FIG. 1 is a development view in which a tread pattern of a tire relating to one embodiment of the present invention is developed on a plane.
FIG. 2 is a cross-sectional view illustrating a part of a circumferential groove relating to the present embodiment.
FIG. 3 is a cross-sectional view illustrating a part of another circumferential groove relating to the present embodiment.

### DETAILED DESCRIPTION

The tire that is one embodiment of the present invention is a heavy-duty tire comprising a tread part, wherein the tread part comprises a plurality of circumferential grooves extending continuously in a tire circumferential direction, wherein the tread part at least comprises a first layer constituting a tread surface, a second layer adjacent to the inner side of the first layer in a radial direction, and a third layer present on the inner side of the second layer in the radial direction, wherein each of the first layer, the second layer, and the third layer is composed of a rubber composition comprising a rubber component and a filler, and wherein Dt is 0.80 or more, t1/H is 0.90 or less, S1/S2 is less than 1.0, and a product (S2×Dt) of S2 and Dt is greater than 10.0, where a tire outer diameter is referred to as Dt, in m, a thickness of the first layer is referred to as t1, in mm, a groove depth at a deepest part of the circumferential grooves is referred to as H, in mm, a content of silica based on 100 parts by mass of a rubber component in a rubber composition constituting the first layer is referred to as S1, in parts by mass, and a content of silica based on 100 parts by mass of a rubber component in a rubber composition constituting the second layer is referred to as S2, in parts by mass.

The reason for improvement of wet grip performance of the heavy-duty tire of the present invention after abrasion is considered as follows, although the following consideration is not intended to be bound by any theory.

When the tread part comprises a plurality of circumferential grooves, a plurality of land parts and block parts partitioned off by the circumferential grooves and ground-contacting ends are to be formed on the tread part. When the ratio (t1/H) of the thickness of the first layer to the groove depth at the deepest part of the circumferential grooves is 0.90 or less, an outer surface of the second layer is located on the outer side in the tire radial direction with respect to the deepest part of the groove bottom of the circumferential grooves, whereby inner parts of the blocks and the land parts are to be formed of two or more rubber layers. When the tread part is abraded and the second layer is exposed, the second layer is to be present in center parts of the land parts and block parts, and the first layer is to be present in edge parts of the land parts and the block parts. Here, since a rubber composition constituting the edge parts of the land parts and the block parts (that is, the first layer) comprises a small amount of silica, it easily exhibits hydrophobicity and easily repels water, so that it is considered that a water removal effect can be easily obtained. Accordingly, it is considered that the center parts of the land parts and the block parts (that is, the second layer) can easily contact a road surface. On the other hand, since a rubber composition constituting the center parts of land parts and the block parts (that is, the second layer) comprises a large amount of silica and falls under a state where its hydrophilicity is high, it easily interacts with a wet road surface, so that it is considered that braking performance is enhanced. Furthermore, when the tread part is composed of three or more layers, energy loss can be easily generated on an interface between the second layer and the third layer by friction between rubber molecular chains, so that it is considered that wet grip performance after abrasion is improved.

On the other hand, when the tire outer diameter Dt is 0.80 mm or more, a large centrifugal force is generated during a rolling motion, so that it is considered that water adhering to a tread surface can be splashed. However, in a case where the outer diameter Dt is relatively small even if the outer diameter Dt is within a range of 0.80 m or more, a centrifugal force is weakened, so that it is considered that water easily remains on the tread surface. Accordingly, when the content S2 of silica in the rubber composition constituting the center parts of the blocks (that is, the second layer) is increased as the tire outer diameter Dt decreases to enhance hydrophilicity, it is considered that wet grip performance can be secured even in a state where water adheres to the tread surface. Additionally, with cooperation of these features, it is considered that a remarkable effect of allowing for improvement of wet grip performance after abrasion is obtained.

A content of the silica in the filler contained in the rubber composition constituting the second layer is preferably 30% by mass or more, from the viewpoint of enhancing hydrophilicity of the land parts and the blocks after abrasion.

The rubber component contained in the rubber composition constituting the second layer comprises preferably 10% by mass or more, more preferably 30% by mass or more of a styrene-butadiene rubber, from the viewpoint of forming a domain of styrene in the rubber composition to make it easy to cause energy loss.

The rubber component contained in the rubber composition constituting the second layer preferably comprises 60% by mass or more of an isoprene-based rubber, from the viewpoint of generating a reaction force against deformation during braking to exhibit a large braking force.

A content of silica in the filler contained in the rubber composition constituting the first layer is preferably 10% by mass or more.

When the content of silica in the filler contained in the rubber composition constituting the first layer is within the above-described range, affinity between the first layer and the second layer becomes good, and peeling of an interface formed on the tread surface after abrasion is suppressed, so that it is considered that wet grip performance after abrasion can be easily improved.

The rubber component contained in the rubber composition constituting the first layer preferably comprises 10% by mass or more of a styrene-butadiene rubber, from the viewpoint of making it easy to cause energy loss even in end parts of the land parts and the block parts by deformation during braking.

A tan δ at 0°C of the rubber composition constituting the first layer (0°C tan δ1) is preferably 0.24 or more.

When 0°C tan δ1 is within the above-described range, it is considered that energy loss can be easily generated even in the end parts of the land parts and the block parts by deformation during braking.

A complex elastic modulus at 0°C of the rubber composition constituting the first layer (0°CE*1) is preferably 10.0 MPa or more.

When 0°CE* of the rubber composition constituting the first layer is within the above-described range, excessive deformation of the land parts and the block parts after abrasion is suppressed, so that it is considered that a reaction force can be easily generated.

A glass transition temperature of the rubber composition constituting the first layer is preferably -60°C or higher.

When the glass transition temperature of the rubber composition constituting the first layer is -60°C or higher, energy loss can be easily obtained, so that it is considered that wet grip performance after abrasion can be easily improved.

An elongation at break of the rubber composition constituting the first layer measured according to JIS K 6251: 2017 is preferably 500% or more.

When the elongation at break of the rubber composition constituting the first layer is within the above-described range, a surface state during abrasion of the tire is easily kept smoother, and a decrease of an actual ground-contacting area is suppressed, so that it is considered that deterioration of wet grip performance of the tire after abrasion can be suppressed.

A product (0°C tan δ1×Dt) of a loss tangent at 0°C of the first layer (0°C tan δ1) and the outer diameter Dt is preferably 0.18 or more.

It is considered that the larger the outer diameter Dt is, the more easily energy loss can be generated also in the end parts of the land parts and the block parts by their deformation. Accordingly, when the product of 0°C tan δ1 and Dt is large, energy loss is generated even in the land parts and the block parts, so that it is considered that wet grip performance after abrasion can be easily improved.

At least one groove wall of each of the circumferential grooves is preferably provided with a recessed part that is recessed outward in a groove width direction from a groove edge appearing on a grounding surface of the tread part.

As the tread part is abraded, the groove width of each of the circumferential grooves is enlarged, whereby drainage performance is improved, so that it is considered that wet grip performance of the tire after abrasion can be easily improved.

When a distance, from an end on the outer side of the recessed part in the tire radial direction to the tread surface, of the circumferential groove whose groove wall is provided with the recessed part that is recessed outward in the groove width direction from the groove edge appearing on the grounding surface of the tread part is referred to as L, L/t1 is preferably greater than 1.0.

When the recessed part is present on the inner side in the tire radial direction with respect to the first layer, as a result, a gap is formed on the layer following the second layer, and drainage performance after abrasion is improved, so that it is considered that wet grip performance after abrasion can be easily improved.

### <Definition>

A "tread part" is a part forming a ground-contacting surface of a tire and is a member located on the outer side in the tire radial direction with respect to members forming a tire skeleton with steel or a textile material, such as a belt layer, a belt reinforcement layer, a carcass layer, and the like, on a cross section in the tire radial direction when the tire comprises these members.

The "standardized rim" is a rim, in a standard system including a standard on which a tire is based, defined for each tire by the standard. The standardized rim refers to, for example, a "standard rim" in applicable sizes described in "JATMA YEAR BOOK" in JATMA (Japan Automobile Tyre Manufacturers Association, Inc), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.). JATMA, ETRTO, and TRA are referred to in this order, and when an applicable size is found during reference to the standard, a standardized rim is based on that standard.

A "standardized internal pressure" is an air pressure, in a standard system including a standard on which a tire is based, defined for each tire by each standard, i.e., the "MAXIMUM AIR PRESSURE" in JATMA, "INFLATION PRESSURE" in ETRTO, or the "maximum value" described in the table "TIRE LOAD LIMITS AT VARIOUS COLD INFLATION PRESSURES" in TRA. Like the standardized rim, JATMA, ETRTO, and TRA are referred to in this order, and when an applicable size is found during reference to the standard, a standardized internal pressure is based on that standard.

A "standardized state" is a state in which a tire is rim-assembled to a standardized rim, filled with air at a standardized internal pressure, and applied with no load. Besides, unless otherwise noted, in the present specification, a size of each part of the tire is measured in the above-described standardized state.

A "standardized load" means a load, in a standard system including a standard on which a tire is based, defined for each tire by the standard. The standardized internal pressure refers to, for example, the "MAXIMUN LOAD CAPACITY" in JATMA, "LOAD CAPACITY" in ETRTO or the "maximum value" described in the table "TIRE LOAD LIMITS AT VARIOUS COLD INFLATION PRESSURES" in TRA. Like the standardized rim and the standardized internal pressure, JATMA, ETRTO, and TRA are referred to in this order, and when an applicable size is found during reference to the standard, a standardized load is based on that standard.

A "ground-contacting end" means a ground-contacting position located on the outermost side in the tire width direction when a standardized load is applied to a tire in a standardized state and the tire contacts a flat surface at a camber angle of 0°.

A "thickness of each of rubber layers constituting a tread part" refers to a thickness of each lubber layer on a tire equatorial plane on a cross section obtained by cutting the tire along a plane including a tire rotation axis and is an average value of thicknesses of the tread measured at five sites by rotating the tire in 72 degree increments in a tire circumferential direction. For example, a thickness of the first layer refers to a direct distance in the tire radial direction from the tread outermost surface to an interface on the inner side of the first layer in the tire radial direction on the tire equatorial plan. Besides, when circumferential grooves are provided on the tire equatorial plane, the thickness of each of the rubber layers constituting the tread part is defined as a thickness of each rubber layer in a center part of a land part nearest to tire equatorial plane in the tire width direction. The "land part nearest to tire equatorial plane" refers to a land part having a groove edge of circumferential grooves present on the tire equatorial plane, the groove edge being nearest to the tire equatorial plane. When such land parts are present on both the lateral sides in the tire width direction, the thickness of each of the rubber layers constituting the tread part is defined as an average value of thicknesses of respective rubber layers in the center parts of these two land parts in the tire width direction. Moreover, when an electrically conductive member or the like is present on a land part on the tire equatorial plane, which makes an interface unclear, the measurement is performed after virtually joining together interfaces blocked by the electrically conductive member or the like.

A "groove", examples of which include circumferential grooves and lateral grooves, means a recessed part having a depth greater than at least 3 mm. Particularly, a groove whose opening width on a tire surface is 2 mm or less is called a "sipe".

A "block part" refers to an area partitioned off by a circumferential groove, a lateral groove, and a grounding end, the circumferential groove and the lateral groove being formed on the tread part and each having an opening width of greater than 2.0 mm on the tread surface, and refers to a land part partitioned off by the above-described circumferential groove and ground-contacting end when it does not have any width direction groove.

A "groove depth at the deepest part of the circumferential grooves" is obtained by a distance, in the tire radial direction, between the tread surface and the deepest part of the groove bottoms of the circumferential grooves. Besides, the "deepest part of the groove bottoms of the circumferential grooves" means a deepest part of a groove bottom of a circumferential groove having the deepest groove depth among circumferential grooves adjacent to a land part or a block part.

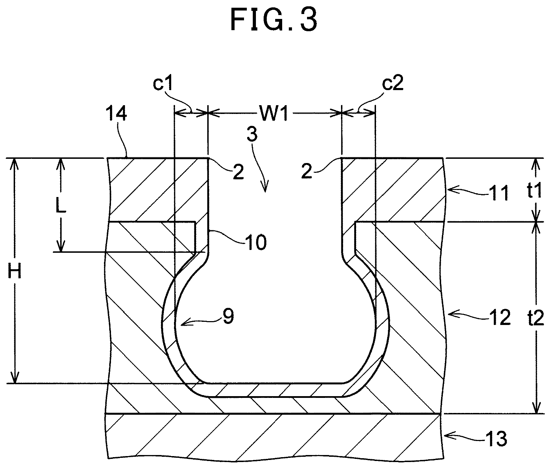

A distance L, of a circumferential groove whose groove wall is provided with a recessed part that is recessed outward in the groove width direction from a groove edge appearing on a grounding surface of the tread part, from an end on the outer side of the recessed part in the tire radial direction to the tread surface refers to a direct distance between an inflection point at which a groove width becomes wide in a direction from the tire surface side to the tire inner side on a cross-section in the tire radial direction and a straight line connecting ends on the tire outmost surface-side of the circumferential groove (FIG. 3). When a groove width of such a circumferential groove continues to gradually increase from an end of the tire surface side to the tire inner side, L is 0.

A "softening agent" is a material giving a rubber component plasticity and is a component extracted from a rubber composition using acetone. Examples of the softening agent includes a softening agent that is a liquid (in a liquid state) at 25°C and a softening agent that is a solid at 25°C. However, the examples of the softening agent shall not include wax and stearic acid commonly used in the tire industry.

A "content of a softening agent" also comprises an amount of a softening agent contained in an extended rubber component previously extended with the softening agent such as oil, a resin component, a liquid rubber component, and the like. Moreover, the same applies to a content of oil, a content of a resin component, and a content of a liquid rubber, and for example, in a case where the extending component is oil, the extending oil is included in the content of oil.

### <Measuring method>

A "thickness of each of the rubber layers constituting the tread part" is measured in a state where a width of a bead part is fitted with a width of a standardized rim after cutting a tire along a plane including a tire rotation axis.

"0°C tan δ" is a loss tangent measured using a dynamic viscoelasticity measuring device (for example, EPLEXOR series manufactured by gabo Systemtechnik GmbH) under a condition of a temperature at 0°C, a frequency of 10 Hz, an initial strain of 10%, a dynamic strain of ±2.5%, and an extension mode. A sample for measurement of 0°C tan δ is a vulcanized rubber composition having a length of 20 mm, a width of 4 mm, and a thickness of 1 mm. In a case where the sample is prepared by being cut out of a tire, the sample is cut out from a tread part of the tire such that the tire circumferential direction becomes a long side and the tire radial direction becomes a thickness direction.

"0°CE*" is a complex elastic modulus measured using a dynamic viscoelasticity measuring device (for example, EPLEXOR series manufactured by gabo Systemtechnik GmbH) under a condition of a temperature at 0°C, a frequency of 10 Hz, an initial strain of 10%, a dynamic strain of ±2.5%, and an extension mode. A sample for measurement of 0°CE* is prepared in the same manner as in the case of 0°C tan δ.

For a "glass transition temperature (Tg) of a rubber composition", a temperature distribution curve of tan δ in a range from -60°C to 40°C is measured using a dynamic viscoelasticity measuring device (for example, EPLEXOR series manufactured by gabo Systemtechnik GmbH) under a condition of a frequency of 10 Hz, an initial strain of 10%, an amplitude of ±0.5%, and a temperature rising rate of 2°C/min, and a temperature corresponding to the largest value of tan δ (tan δ peak temperature) in the obtained temperature distribution curve is determined as Tg. In a case where two points at which tan δ has the largest value exist in the range from -60°C to 40°C, one of the two points that is on the lower temperature side than the other is determined as Tg. Moreover, in a case where a temperature distribution curve in which tan δ gradually decreases with an increase of temperature is obtained in the range from -60°C to 40°C, Tg is defined as -60°C from the above-mentioned definition. A sample for measurement of Tg is prepared in the same manner as in the case of 0°C tan δ.

An "elongation at break EB" is an elongation at break (elongation at cutting), in %, measured under a condition of a tensile speed of 3.3 mm/sec, in an atmosphere at 23°C, in accordance with JIS K 6251:2017. A sample for measurement of EB is a vulcanized rubber test piece of dumbbell-shaped No. 7 having a thickness of 1 mm. In a case where the sample is prepared by being cut out from the tire, the sample is cut out from a tread part of a tire such that the tire circumferential direction becomes a tensile direction and the tire radial direction becomes a thickness direction.

A "styrene content" is a value calculated by ¹H-NMR measurement and is applied to a rubber component having a repeating unit derived from styrene such as, for example, a SBR and the like. A "vinyl content (1,2-bond butadiene unit amount)" is a value calculated in accordance with JIS K 6239-2:2017 by an infrared absorption spectrometry and is applied to a rubber component having a repeating unit derived from butadiene such as, for example, a SBR, a BR, and the like A "cis content (cis-1,4-bond butadiene unit amount)" is a value calculated in accordance with JIS K 6239-2:2017 by an infrared absorption spectrometry and is applied to a rubber component having a repeating unit derived from butadiene such as, for example, a BR and the like.

The "total styrene amount in the rubber component" is a total content, in % by mass, of the styrene units compounded in 100% by mass of the rubber component and is a value obtained by calculating, for each rubber component, a value obtained by multiplying a styrene content, in % by mass, by a mass fraction in the rubber component and summing up these values. Specifically, it is calculated by Σ (styrene content (% by mass) of each styrene unit-containing rubber × content (% by mass) of each styrene unit-containing rubber in rubber component / 100).

A "weight-average molecular weight (Mw)" can be calculated in terms of a standard polystyrene based on measurement values obtained by a gel permeation chromatography (GPC) (for example, GPC-8000 Series manufactured by Tosoh Corporation, detector: differential refractometer, column: TSKGEL SUPERMULTIPORE HZ-M manufactured by Tosoh Corporation). The Mw is applied to, for example, a SBR, a BR, or the like.

A "nitrogen adsorption specific surface area (N₂SA) of carbon black" is measured according to JIS K 6217-2:2017. A "nitrogen adsorption specific surface area (N₂SA) of silica" is measured by a BET method according to ASTM D3037-93.

A "softening point of the resin component" is a temperature at which a sphere drops when the softening point specified in JIS K 6220-1: 2015 7.7 is measured with a ring and ball softening point measuring device.

A procedure for producing a tire that is one embodiment of the present invention will be described below in detail. However, the following descriptions are illustrative for explaining the present invention and are not intended to limit the technical scope of the present invention to this description range only.

### [Tire]

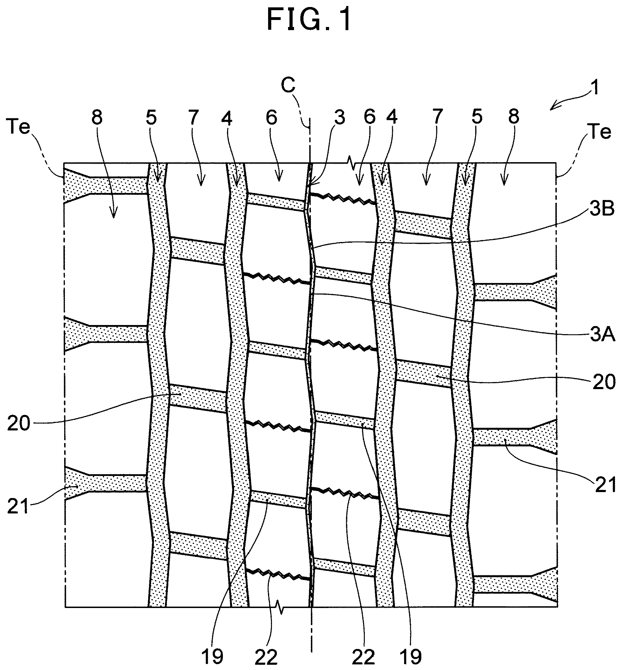

FIG. 1 shows one example of a development view in which a tread pattern of a tire relating to one embodiment of the present invention is developed on a plane. However, the present invention is not limited to this. As shown in Fig. 1, in a tread part 1, a pair of center land parts 6, 6, a pair of middle land parts 7, 7, and a pair of shoulder land parts 8, 8 are provided by circumferential grooves 3, 4, and 5 extending continuously in a tire circumferential direction. Each center land part 6 is formed between a center circumferential groove 3 and a middle circumferential groove 4. Each middle land part 7 is formed between a middle circumferential groove 4 and a shoulder circumferential groove 5. Each shoulder land part 8 is formed between a shoulder circumferential groove 5 and a grounding end Te.

Each center land part 6 is provided with a plurality of center lateral grooves 19 each crossing the center land part 6 and communicating with a center circumferential groove 3 and a middle circumferential groove 4, and independent blocks are formed in each center land part 6. Each middle land part 7 is provided with a plurality of middle lateral grooves 20 each crossing the middle land part 7 and communicating with a middle circumferential groove 4 and a shoulder circumferential groove 5, and independent blocks are formed in each middle land part 7. Each shoulder land part 8 is provided with a plurality of shoulder lateral grooves 21 each communicating with a shoulder circumferential groove 5.

In FIG. 1, the center circumferential grooves 3 extend in zigzag shape. Moreover, each of the center circumferential grooves 3 comprises a center long side part 3A and a center short side part 3B alternating with the center long side part 3A. The center long side part 3A is inclined to one side relative to the tire circumferential direction. The center short side part 3B is inclined in a direction opposite to the direction in which the center long side part 3A is inclined.

Although the center lateral grooves 19 and the middle lateral grooves 20 linearly extend in FIG. 1, the present invention is not limited to such an aspect, and they may be those extending, for example, in a wavy, sinusoidal, or zigzag shape.

Each center land part 6 is provided with a center sipe 22 communicating with a center circumferential groove 3 and a middle circumferential groove 4. Since such a sipe deforms in a direction in which its width is closed when a block edge of the center land part 6 in the tire circumferential direction contacts a ground, wall surfaces of the sipe adjacent to each other closely adhere to each other for supporting each other, and deterioration of rigidity of a land part can be suppressed. Although the center sipe 22 extends in zigzag shape, the present invention is not limited to such an aspect, and the center sipe may be one extending, for example, in a wavy or sinusoidal shape or linearly.

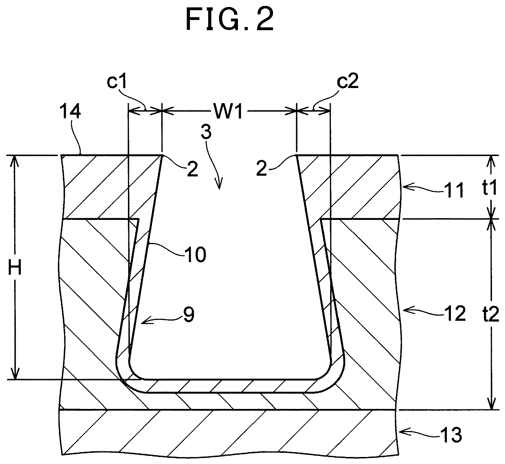

FIG. 2 is a cross-sectional view illustrating a part of a circumferential groove relating to the present embodiment. In FIG. 2, a vertical direction is a tire radial direction, a horizontal direction is a tire axial direction, and a direction perpendicular to a paper surface is a circumferential direction.

As illustrated in the drawing, the tread part of the tire relating to the present embodiment comprises a first layer 11, a second layer 12, and a third layer 13, wherein an outer surface of the first layer 11 constitutes a tread surface, the second layer 12 is adjacent to the inner side of the first layer 11 in the tire radial direction, and the third layer 13 is present on the inner side of the second layer 12 in the tire radial direction. Moreover, as long as the object of the present invention is achieved, one or two or more rubber layers may be further provided between the second layer 12 and the third layer 13 and/or between the third layer 13 and a belt layer (not shown in the drawings).

A thickness t1 of the first layer 11 is preferably 5 mm or more, more preferably 8 mm or more, further preferably 10 mm or more, from the viewpoint of effects of the present invention. On the other hand, t1 is preferably 20 mm or less, more preferably 18 mm or less, further preferably 15 mm or less.

A thickness t2 of the first layer 12 is preferably 1 mm or more, more preferably 3 mm or more, further preferably 5 mm or more, from the viewpoint of the effects of the present invention. On the other hand, t2 is preferably 15 mm or less, more preferably 12 mm or less, further preferably 10 mm or less.

A groove depth H at the deepest part of circumferential grooves is preferably greater than 5 mm, more preferably greater than 8 mm, further preferably greater than 10 mm, particularly preferably greater than 12 mm, from the viewpoint of the effects of the present invention. On the other hand, H is preferably less than 26 mm, more preferably less than 24 mm, further preferably less than 22 mm, particularly preferably less than 20 mm.

The tire relating to the present embodiment is formed such that the deepest part of groove bottoms of the circumferential grooves is located on the inner side in the tire radial direction with respect to the outer surface of the second layer 12, and the inside of each block is formed of two or more rubber layers. t1/H is 0.90 or less, preferably 0.85 or less, more preferably 0.80 or less, further preferably 0.75 or less, particularly preferably 0.70 or less, from the viewpoint of the effects of the present invention. On the other hand, a lower limit value of t1/H is, but not particularly limited to, preferably 0.20 or more, more preferably 0.30 or more, further preferably 0.40 or more.

The second layer 12 preferably comprises a recessed part that is recessed inward in the tire radial direction with respect to an outermost part of the second layer, and a part of the first layer 11 is preferably formed within the recessed part of the second layer 12. The first layer 11 more preferably forms a surface of the recessed part. With such a configuration, the second layer is present on a center part of each of land parts and block parts and the first layer is present on an edge part of each of land parts and block parts when the tread part is abraded and the second layer is exposed, so that it is considered that the effects of the present invention are easily exhibited.

In FIG. 2, each circumferential groove 3 is formed such that a deepest part of a groove bottom of the circumferential groove 3 is located an inner side in the tire radial direction with respect to the outermost part of the second layer 12 in the tire radial direction in a land part adjacent to the circumferential groove 3. Specifically, on the inner side of the circumferential groove 3 in the tire radial direction, the second layer 12 comprises a recessed part that is recessed inward in the tire radial direction with respect to its outermost part, and a part of the first layer 11 is formed within the recessed part of the second layer 12 to have a predetermined thickness. The circumferential groove 3 is formed to enter into the inner side of the recessed part of the second layer 12 beyond the outermost part of the second layer 12 in the tire radial direction.

At least one groove wall of each circumferential groove is preferably provided with a recessed part that is recessed outward in the groove width direction with respect to a groove edge 2 appearing on a grounding surface of the tread part. When such a recessed part is provided on the groove wall of the circumferential groove, a gap is formed inside the tread part, and it is considered that shock can be absorbed and propagation of the shock can be suppressed by the gap. In FIG. 2, recessed parts 9 are provided on both groove walls 10 of a circumferential groove 3. In FIG. 2, although the groove width of the circumferential groove 3 continues to gradually increase from its ends on the tire surface side toward the inner side in the tire radial direction, the present invention is not limited to such an aspect.

FIG. 3 is a cross-sectional view illustrating a part of another circumferential groove relating to the present embodiment. In FIG. 3, a groove width of a circumferential groove 3 is constant in a range from the tread surface 14 to a portion standing apart from the tread surface 14 by a distance L and gradually decreases after gradually increasing from there toward the inner side in the tire radial direction, thereby forming a recessed part 9.

The distance L, of the circumferential groove whose groove wall is provided with the recessed part recessed outward in the groove width direction with respect to the groove edge appearing on the grounding surface of the tread part, from the outer end of the recessed part in the tire radial direction to the tread surface is preferably larger than t1. When the recessed part is present on the inner side in the tire radial direction with respect to the first layer, as a result, the gap is formed on the layer following the second layer, and drainage performance after abrasion is improved, so that it is considered that wet grip performance after abrasion can be easily improved. L/t1 is preferably greater than 1.0, more preferably greater than 1.1, further preferably greater than 1.2. On the other hand, an upper limit value of L/t1 is, but not particularly limited to, preferably less than 4.0, preferably less than 3.0, further preferably less than 2.0.

L is preferably greater than 5 mm, preferably greater than 8 mm, further preferably greater than 10 mm. On the other hand, L is preferably less than 25 mm, more preferably less than 21 mm, further preferably less than 16 mm.

A total recessed amount of the circumferential groove 3 (c1 + c2 in FIGS. 2 and 3) is preferably 0.10 to 5.00 times, more preferably 0.20 to 3.00 times, further preferably 0.30 to 1.00 times as much as the groove width W1 of the circumferential groove 3. Besides, in a case where a plurality of circumferential grooves is present which each has such a recessed part, a total recessed amount of any one of the circumferential grooves may satisfy the above-described relationship or total recessed amounts of all the circumferential grooves each having such a recessed part may satisfy the above-described relationship.

A tan δ at 0°C of the rubber composition constituting the first layer (0°C tan δ1) is preferably 0.18 or more, more preferably 0.20 or more, further preferably 0.22 or more, particularly preferably 0.24 or more, from the viewpoint of wet grip performance. When 0°C tan δ1 is within the above-described ranges, it is considered that, due to deformation during braking, energy loss can be easily generated even at ends of the land parts and the block parts. Moreover, a tan δ at 0°C of the rubber composition constituting the second layer (0°C tan δ2) is preferably 0.18 or more, more preferably 0.20 or more, further preferably 0.22 or more, particularly preferably 0.24 or more. On the other hand, 0°C tan δ1 and 0°C tan δ2 are preferably 0.80 or less, more preferably 0.60 or less, further preferably 0.50 or less, particularly preferably 0.40 or less, from the viewpoint of fuel efficiency. Besides, 0°C tan δ of each rubber composition can be appropriately adjusted depending on types or compounding amounts of a rubber component, a filler, and a softening agent which are described below.

0°CE* of the rubber composition constituting the first layer (0°CE*1) is preferably 6.0 MPa or more, more preferably 8.0 MPa or more, further preferably 10.0 MPa or more, particularly preferably 12.0 MPa or more. When 0°CE*1 is within the above-described ranges, excessive deformation of the land parts and the block parts after abrasion is suppressed, so that it is considered that a reaction force can be easily generated. Moreover, 0°CE* of the rubber composition constituting the second layer (0°CE*2) is preferably 8.0 MPa or more, more preferably 10.0 MPa or more, further preferably 12.0 MPa or more, particularly preferably 14.0 MPa or more. On the other hand, 0°CE*1 and 0°CE*2 are preferably 40.0 MPa or less, more preferably 30.0 MPa or less, further preferably 25.0 MPa or less, from the viewpoint of followability to a road surface. Besides, 0°CE* of each rubber composition can be appropriately adjusted depending on types or compounding amounts of a rubber component, a filler, and a softening agent which are described below.

Tg of the rubber composition constituting the first layer (Tg1) is preferably -60°C or higher, more preferably -57°C or higher, further preferably - 54°C or higher, from the viewpoint of wet grip performance. When Tg1 is -60°C or higher, energy loss can be easily obtained, so that it is considered that wet grip performance after abrasion can be easily improved. Moreover, Tg of the rubber composition constituting the second layer (Tg2) is preferably -60°C or higher, more preferably -55°C or higher, further preferably -50°C or higher. Besides, an upper limit value of each of Tg1 and Tg2 is, but not particularly limited to, preferably 20°C or lower, more preferably 10°C or lower, further preferably 0°C or lower, particularly preferably -10°C or lower. Besides, Tg of each rubber composition can be appropriately adjusted depending on types or compounding amounts of a rubber component, a filler, and a softening agent which are described below.

EB of the rubber composition constituting the first layer (EB1) is preferably 350% or more, more preferably 400% or more, further preferably 450% or more, particularly preferably 500% or more, from the viewpoint of abrasion resistance. When EB1 is within the above-described ranges, a state of a surface during abrasion of the tire is easily kept smoother, and a decrease of an actual ground-contacting area is suppressed, so that it is considered that deterioration of wet grip performance of the tire after abrasion can be suppressed. Moreover, EB of the rubber composition constituting the second layer (EB2) is preferably 400% or more, more preferably 450% or more, further preferably 500% or more, particularly preferably 520% or more. On the other hand, an upper limit value of each of EB1 and EB2 is not particularly limited. Besides, EB of each rubber composition can be appropriately adjusted depending on types or compounding amounts of a rubber component, a filler, and a softening agent which are described below.

A tire outer diameter Dt is 0.80 m or more, and furthermore can be 0.85 m or more, 0.90 m or more, 0,95 m or more, or 1.00 m or more, from the viewpoint of the effects of the present invention. Moreover, Dt is preferably 1.50 m or less, more preferably 1.30 m or less.

A product (0°C tan δ1xDt) of 0°C tan δ1 and Dt is 0.16 or more, preferably 0.17 or more, more preferably 0.18 or more. It is considered that the larger Dt is, the more easily the ends of the land parts and the block parts can also generate energy loss by their deformation. Accordingly, when the product of 0°C tan δ1 and Dt is large, energy loss is generated even in the land parts and the block parts, so that it is considered that wet grip performance after abrasion can be easily improved. On the other hand, an upper limit value of 0°C tan δ1×Dt is, but not particularly limited to, preferably 0.80 or less, more preferably 0.60 or less, further preferably 0.40 or less, particularly preferably 0.30 or less.

### [Rubber composition]

In the tire relating to the present embodiment, wet grip performance after abrasion can be improved by cooperation of the above-mentioned configurations of the tire and the tread and the above-described physical properties of the rubber composition constituting each layer of the tread part. The rubber composition relating to the present embodiment will be described below, though the description shall be applicable to any rubber layer of the tread part, unless otherwise noted.

<Rubber component>

For the rubber composition relating to the present embodiment, a diene-based rubber is appropriately used as a rubber component. Examples of the diene-based rubber include, for example, an isoprene-based rubber, a butadiene rubber (BR), a styrene-butadiene rubber (SBR), a styrene-isoprene rubber (SIR), a styrene-isoprene-butadiene rubber (SIBR), a chloroprene rubber (CR), an acrylonitrile-butadiene rubber (NBR), and the like. These diene-based rubbers may be modified rubbers each treated with a modified group that can interact with a filler such as carbon black, silica, and the like or may be hydrogenated rubbers for which hydrogeneration treatment is performed on a part of unsaturated bonds. The diene-based rubbers may be used alone, or two or more thereof may be used in combination. Moreover, an extended rubber previously extended with a softening agent which will be described below may be used.

A content of the diene-based rubber in the rubber component is preferably 70% by mass or more, more preferably 80% by mass or more, further preferably 90% by mass or more, particularly preferably 95% by mass or more. Moreover, a rubber component consisting of a diene-based rubber may be used.

As a diene-based rubber component, at least one selected from the group consisting of an isoprene-based rubber, a styrene-butadiene rubber (SBR), and a butadiene rubber (BR) is appropriately used. The rubber component constituting the first layer preferably comprises an isoprene-based rubber, more preferably comprises an isoprene-based rubber and a BR, or further preferably comprises an isoprene-based rubber, a BR, and an SBR. The rubber component constituting the second layer preferably comprises an isoprene-based rubber, more preferably comprises an isoprene-based rubber and a BR, or further preferably comprises an isoprene-based rubber, a BR, and an SBR. The rubber component constituting the third layer preferably comprises an isoprene-based rubber, more preferably comprises 60% by mass or more of an isoprene-based rubber, further preferably comprises 80% by mass or more of an isoprene-based rubber.

### (Isoprene-based rubber)

As the isoprene-based rubber, those common in the tire industry can be used, such as, for example, an isoprene rubber (IR), a natural rubber, and the like. Examples of the natural rubber include not only non-modified natural rubbers (NR) but also modified natural rubbers such as an epoxidized natural rubber (ENR), a hydrogenated natural rubber (HNR), a deproteinized natural rubber (DPNR), an ultra pure natural rubber, a grafted natural rubber, and the like. These isoprene-based rubbers may be used alone, or two or more thereof may be used in combination.

The NR is not particularly limited, and those common in the tire industry can be used, examples of which include, for example, SIR20, RSS#3, TSR20, and the like.

A content of the isoprene-based rubber in the rubber component constituting the first layer is preferably 10% by mass or more, more preferably 30% by mass or more, further preferably 50% by mass or more, particularly preferably 60% by mass or more, from the viewpoint of the effects of the present invention. Moreover, an upper limit value of the content is, but not particularly limited to, preferably 99% by mass or less, more preferably 95% by mass or less, further preferably 90% by mass or less.

A content of the isoprene-based rubber in the rubber component constituting the second layer is preferably 10% by mass or more, more preferably 30% by mass or more, further preferably 45% by mass or more, particularly preferably 60% by mass or more, from the viewpoint of the effects of the present invention. Moreover, an upper limit value of the content is, but not particularly limited to, preferably 99% by mass or less, more preferably 80% by mass or less, further preferably 75% by mass or less.

### (BR)

The BR is not particularly limited, and those common in the tire industry can be used, such as, for example, a BR having a cis content of less than 50% by mass (a low cis BR), a BR having a cis content of 90% by mass or more (a high cis BR), a rare-earth-based butadiene rubber synthesized using a rare-earth element-based catalyst (a rare-earth-based BR), a BR containing a syndiotactic polybutadiene crystal (a SPB-containing BR), a modified BR (a high cis modified BR, a low cis modified BR), and the like. These BRs may be used alone, or two or more thereof may be used in combination.

As the high cis BR, for example, those commercially available form Zeon Corporation, Ube Industries, Ltd., JSR Corporation, etc. can be used. When the rubber composition comprises the high cis BR, abrasion resistance can be improved. The cis content of the high cis BR is preferably 95% by mass or more, more preferably 96% by mass or more, further preferably 97% by mass or more. Besides, the cis content of the BR is measured by the above-described measuring method.

As the modified BR, a modified butadiene rubber (modified BR) is appropriately used whose terminal and/or main chain are modified with a functional group including at least one element selected from the group consisting of silicon, nitrogen, and oxygen.

Examples of other modified BRs include those obtained by adding a tin compound after polymerizing 1,3-butadiene by a lithium initiator, the terminal of the modified BR molecule being further bonded by tin-carbon bond (tin-modified BRs), and the like. Moreover, the modified BR may be either non-hydrogenated or hydrogenated.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,000,000 or less, from the viewpoints of cross-linking uniformity. Besides, the Mw of the BR can be measured by the above-described measuring method.

A content of the BR in the rubber component constituting the first layer is preferably 50% by mass or less, more preferably 40% by mass or less, further preferably 30% by mass or less. Moreover, a lower limit value of the content is, but not particularly limited to, preferably 1% by mass or more, more preferably 5% by mass or more, further preferably 10% by mass or more.

A content of the BR in the rubber component constituting the second layer is preferably 60% by mass or less, more preferably 45% by mass or less, further preferably 35% by mass or less. Moreover, a lower limit value of the content is, but not particularly limited to, preferably 1% by mass or more, more preferably 5% by mass or more, further preferably 10% by mass or more.

### (SBR)

The SBR is not particularly limited, examples of which include a non-modified solution-polymerized SBR (S-SBR), a non-modified emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, the S-SBR and the modified SBR are preferable. Furthermore, hydrogenated ones of these SBRs (hydrogenated SBRs) and the like can also be used. These SBRs may be used alone, or two or more thereof may be used in combination.

An extended SBR or a non-extended SBR may be used as a SBR relating to the present embodiment. When the extended SBR is used, an extending amount of the SBR, that is, a content of an extending softening agent in the SBR is preferably 10 to 50 parts by mass based on 100 parts by mass of a rubber solid content of the SBR.

The SBRs listed above may be used alone, or two or more thereof may be used in combination. As the SBRs listed above, for example, those commercially available from Sumitomo Chemical Co., JSR Corporation, Ltd., Asahi Kasei Corporation, Zeon Corporation, ZS Elastomer Co., Ltd., etc. can be used.

A styrene content of the SBR is preferably 40% by mass or less, more preferably 36% by mass or less, further preferably 32% by mass or less, particularly preferably 28% by mass or less. Moreover, the styrene content of the SBR is preferably 5% by mass or more, more preferably 7% by mass or more, further preferably 10% by mass or more. Besides, the styrene content of the SBR is measured by the above-described measuring method.

A weight-average molecular weight (Mw) of the SBR is preferably 100,000 or more, more preferably 200,000 or more, further preferably 300,000 or more, from the viewpoint of the effects of the present invention. Moreover, the weight-average molecular weight is preferably 2,000,000 or less, more preferably 1,800,000 or less, further preferably 1,500,000 or less, from the viewpoint of cross-linking uniformity. Besides, the weight-average molecular weight of the SBR is measured by the above-described measurement method.

A content of the SBR in the rubber component constituting the first layer is preferably 50% by mass or less, more preferably 40% by mass or less, further preferably 30% by mass or less, particularly preferably 25% by mass or less. Moreover, a lower limit value of the content is, but not particularly limited to, preferably 1% by mass or more, more preferably 3% by mass or more, further preferably 5% by mass or more, further preferably 7% by mass or more, particularly preferably 10% by mass or more.

A total styrene amount in the rubber component constituting the first layer is preferably less than 20% by mass, preferably less than 16% by mass, further preferably less than 12% by mass, particularly preferably less than 8.0% by mass. Moreover, a lower limit value of the total styrene amount in the rubber component constituting the first layer is, but not particularly limited to, for example, preferably greater than 1.0% by mass, more preferably greater than 2.0% by mass, further preferably greater than 3.0% by mass.

A content of the SBR in the rubber component constituting the second layer is preferably 50% by mass or less, more preferably 40% by mass or less, further preferably 35% by mass or less. Moreover, a lower limit value of the content is, but not particularly limited to, preferably 5% by mass or more, more preferably 10% by mass or more, further preferably 20% by mass or more, particularly preferably 30% by mass or more.

A total styrene amount in the rubber component constituting the second layer is preferably less than 20% by mass, preferably less than 16% by mass, further preferably less than 12% by mass, particularly preferably less than 8.0% by mass. Moreover, a lower limit value of the total styrene amount in the rubber component constituting the second layer is, but not particularly limited to, preferably greater than 1.0% by mass, more preferably greater than 2.0% by mass, further preferably greater than 3.0% by mass.

### (Other rubber components)

The rubber component may also comprise other rubber components other than the diene-based rubbers to an extent so as not to affect the effects of the present invention. As the other rubber components other than the diene-based rubbers, a cross-linkable rubber component commonly used in the tire industry can be used, examples of which include, for example, non-diene-based rubbers such as a butyl rubber (IIR), a halogenated butyl rubber, an ethylene propylene rubber, a polynorbornene rubber, a silicone rubber, a polyethylene chloride rubber, a fluororubber (FKM), an acrylic rubber (ACM), a hydrin rubber, and the like. These other rubber components may be used alone, or two or more thereof may be used in combination. Moreover, the rubber component may or may not comprise a known thermoplastic elastomer in addition to the above-described rubber components.

### <Filler>

For the rubber composition relating to the present embodiment, a filler comprising carbon black and/or silica is appropriately used. The rubber composition constituting each of the first layer and the second layer preferably comprises carbon black as a filler, and more preferably comprises carbon black and silica. The rubber composition constituting the third layer preferably comprises, as a filler, carbon black.

### (Carbon black)

Carbon black is not particularly limited, and those common in the tire industry can be used, such as, for example, GPF, FEF, HAF, ISAF, SAF, and the like. Besides, in addition to carbon black generated by burning general mineral oil, carbon black, for which a biomass material such as lignin and the like is used, may be used. Moreover, recovered carbon black obtained by pyrolyzing a product containing carbon black such as a tire, a plastic product, and the like may be used. These carbon black may be used alone, or two or more thereof may be used in combination.

A nitrogen adsorption specific surface area (N₂SA) of the carbon black contained in the rubber composition constituting each of the first layer and the second layer is preferably 70 m²/g or more, more preferably 90 m²/g or more, further preferably 110 m²/g or more, particularly preferably 130 m²/g or more, from the viewpoint of reinforcing property. Moreover, it is preferably 200 m²/g or less, more preferably 180 m²/g or less, further preferably 160 m²/g or less, from the viewpoints of fuel efficiency and processability. A nitrogen adsorption specific surface area (N₂SA) of carbon black contained in the rubber composition constituting the third layer is not particularly limited. Besides, the N₂SA of the carbon black is measured by the above-described measuring method.

A content of carbon black compounded based on 100 parts by mass of the rubber component is preferably 20 parts by mass or more, more preferably 25 parts by mass or more, further preferably 30 parts by mass or more, particularly preferably 35 parts by mass or more, from the viewpoint of reinforcing property. Moreover, it is preferably 90 parts by mass or less, more preferably 85 parts by mass or less, further preferably 80 parts by mass or less, particularly preferably 75 parts by mass or less, from the viewpoints of fuel efficiency and processability.

### (Silica)

Silica is not particularly limited, and those common in the tire industry can be used, such as, for example, silica prepared by a dry process (anhydrous silica), silica prepared by a wet process (hydrous silica), and the like. Among them, hydrous silica prepared by a wet process is preferable for the reason that it has many silanol groups. Besides, in addition to the above-described silica, silica made from a biomass material such as rice husks and the like may be appropriately used. These silica may be used alone, or two or more thereof may be used in combination.

A nitrogen adsorption specific surface area (N₂SA) of silica is preferably 120 m²/g or more, more preferably 150 m²/g or more, further preferably 170 m²/g or more, from the viewpoints of fuel efficiency and abrasion resistance. Moreover, it is preferably 350 m²/g or less, more preferably 300 m²/g or less, further preferably 250 m²/g or less, from the viewpoints of fuel efficiency and processability. Besides, the N₂SA of silica is measured by the above-described measuring method.

A content S1 of silica based on 100 parts by mass of the rubber component in the rubber composition constituting the first layer is, but not particularly limited to, preferably 1 part by mass or more, more preferably 3 parts by mass or more, further preferably 5 parts by mass or more. Moreover, the content is preferably 50 parts by mass or less, more preferably 40 parts by mass or less, further preferably 30 parts by mass or less, particularly preferably 20 parts by mass or less.

A content S2 of silica based on 100 parts by mass of the rubber component in the rubber composition constituting the second layer is preferably 10 parts by mass or more, more preferably 14 parts by mass or more, further preferably 18 parts by mass or more, further preferably 24 parts by mass or more, particularly preferably 30 parts by mass or more, from the viewpoint of the effects of the present invention. Moreover, the content is preferably 80 parts by mass or less, more preferably 70 parts by mass or less, further preferably 60 parts by mass or less, particularly preferably 50 parts by mass or less.

A content of silica based on 100 parts by mass of the rubber component in the rubber composition constituting the third layer is not particularly limited.

S1/S2 is less than 1.0, preferably less than 0.90, more preferably less than 0.80, further preferably less than 0.70, particularly preferably less than 0.60, from the viewpoint of the effects of the present invention. On the other hand, a lower limit value of S1/S2 is, but not particularly limited to, for example, preferably greater than 0, more preferably greater than 0.05, further preferably greater than 0.10.

A product (S2×Dt) of S2 and Dt is greater than 10.0, preferably greater than 12.0, more preferably greater than 14.0, further preferably greater than 16.0, particularly preferably greater than 18.0. Moreover, when the content S2 of silica in the rubber composition constituting the center part of each block (that is, the second layer) is increased with a decrease of the tire outer diameter Dt to enhance hydrophilicity, it is considered that wet grip performance can be secured even in a state where water adheres to the tread surface. On the other hand, an upper limit value of S2×Dt is, but not particularly limited to, preferably less than 80.0, more preferably less than 60.0, further preferably less than 50.0, particularly preferably less than 40.0.

### (Other fillers)

Fillers other than silica and carbon black are not particularly limited, and those conventionally and commonly used in the tire industry can be compounded, such as, for example, aluminum hydroxide, alumina (aluminum oxide), calcium carbonate, magnesium sulfate, talc, clay, biochar, and the like. These other fillers may be used alone, or two or more thereof may be used in combination.

A total content of fillers based on 100 parts by mass of the rubber component is preferably 25 parts by mass or more, more preferably 30 parts by mass or more, further preferably 35 parts by mass or more, particularly preferably 40 parts by mass or more. Moreover, the total content is preferably 140 parts by mass or less, more preferably 120 parts by mass or less, further preferably 100 parts by mass or less, particularly preferably 80 parts by mass or less.

A content ratio of silica in the filler contained in the rubber composition constituting the first layer is preferably 1% by mass or more, more preferably 4% by mass or more, further preferably 7% by mass or more, particularly preferably 10% by mass or more. Moreover, an upper limit of the content ratio is, but not particularly limited to, preferably 95% by mass or less, more preferably 75% by mass or less.

A content ratio of the silica in the filler contained in the rubber composition constituting the second layer is preferably 20% by mass or more, more preferably 30% by mass or more, further preferably 40% by mass or more, particularly preferably 45% by mass or more. Moreover, an upper limit value of the content ratio is, but not particularly limited to, preferably 95% by mass or less, more preferably 75% by mass or less.

### (Silane coupling agent)

Silica is preferably used in combination with a silane coupling agent. The silane coupling agent is not particularly limited, and any silane coupling agent conventionally used in combination with silica in the tire industry can be used, such as, for example, mercapto-based silane coupling agents such as 3-mercaptopropyltrimethoxysilane, 3-mercaptopropyltriethoxysilane, 2-mercaptoethyltrimethoxysilane, 2-mercaptoethyltriethoxysilane, and the like; sulfide-based silane coupling agents such as bis(3-triethoxysilylpropyl)disulfide, bis(3-triethoxysilylpropyl)tetrasulfide, and the like; thioester-based silane coupling agents such as 3-octanoylthio-1-propyltriethoxysilane, 3-hexanoylthio-1-propyltriethoxysilane, 3-octanoylthio-1-propyltrimethoxysilane, and the like; vinyl-based silane coupling agents such as vinyltriethoxysilane, vinyltrimethoxysilane, and the like; amino-based silane coupling agents such as 3-aminopropyltriethoxysilane, 3-aminopropyltrimethoxysilane, 3-(2-aminoethyl)aminopropyltriethoxysilane, and the like; glycidoxy-based silane coupling agents such as γ-glycidoxypropyltriethoxysilane, γ-glycidoxypropyltrimethoxysilane, and the like; nitro-based silane coupling agents such as 3-nitropropyltrimethoxysilane, 3-nitropropyltriethoxysilane, and the like; chloro-based silane coupling agents such as 3-chloropropyltrimethoxysilane, 3-chloropropyltriethoxysilane, and the like; and the like. Among them, a sulfide-based silane coupling agent and/or a mercapto-based silane coupling agent are preferably compounded in the rubber composition. As the silane coupling agent, for example, those commercially available from Evonik Degussa GmbH, Momentive Performance Materials, etc. can be used. These silane coupling agents may be used alone, or two or more thereof may be used in combination.

A content of the silane coupling agent based on 100 parts by mass of silica is preferably 1.0 parts by mass or more, more preferably 3.0 parts by mass or more, further preferably 5.0 parts by mass or more, from the viewpoint of enhancing dispersibility of silica. Moreover, it is preferably 20 parts by mass or less, more preferably 15 parts by mass or less, further preferably 12 parts by mass or less, from the viewpoints of cost and processability.

### <Other compounding agents>

Besides the above-described components, the rubber composition relating to the present embodiment can also appropriately comprise compounding agents conventionally and commonly used in the tire industry, such as, for example, a softening agent, wax, stearic acid, zinc oxide, an antioxidant, a vulcanizing agent, a vulcanization accelerator, and the like.

Examples of the softening agent include, for example, a resin component, oil, a liquid polymer, and the like.

Examples of the resin component include a petroleum resin, a terpene-based resin, a rosin-based resin, a phenol-based resin, and the like which are commonly used in the tire industry, and as a softening agent A, a terpene-based resin is preferably included in the rubber composition. These resin components may be used alone, or two or more thereof may be used in combination.

Examples of the terpene-based resin include a polyterpene resin consisting of at least one selected from terpene compounds such as α-pinene, β-pinene, limonene, dipentene, and the like; an aromatic modified terpene resin made from a terpene compound described above and an aromatic compound; a terpene phenol resin made from a terpene compound and a phenol-based compound; and a resin obtained by hydrogenating these types of terpene-based resin (hydrogenated terpene-based resin). Examples of the aromatic compound from which the aromatic modified terpene resin is made include, for example, styrene, α-methylstyrene, vinyltoluene, divinyltoluene, and the like. Examples of the phenol-based compound from which the terpene phenol resin is made include, for example, phenol, bisphenol A, cresol, xylenol, and the like.

Examples of the petroleum resin include a C5-based petroleum resin, an aromatic petroleum resin, a C5-C9-based petroleum resin, and the like.

In the present specification, the "C5-based petroleum resin" means a resin obtained by polymerizing C5 fractions and may be those undergoing hydrogeneration or modification. Examples of C5 fractions include, for example, petroleum fractions having 4 to 5 carbon atoms, such as cyclopentadiene, pentene, pentadiene, isoprene, and the like. Dicyclopentadiene resin (DCPD resin) is appropriately used as a C5-based petroleum resin.

In the present specification, the "aromatic petroleum resin" means a resin obtained by polymerizing C9 fractions and may be those undergoing hydrogeneration or modification. Examples of C9 fractions include, for example, petroleum fractions having 8 to 10 carbon atoms, such as vinyltoluene, alkylstyrene, indene, methylindene, and the like. As a specific example of the aromatic petroleum resin, for example, a coumarone-indene resin, a coumarone resin, an indene resin, and an aromatic vinyl-based resin are appropriately used. As the aromatic vinyl-based resin, a homopolymer of α-methylstyrene or styrene or a copolymer of α-methylstyrene and styrene is preferable, and the copolymer of α-methylstyrene and styrene is more preferable, because it is economical, easy to process, and excellent in heat generation. As the aromatic vinyl-based resin, for example, those commercially available from Kraton Corporation, Eastman Chemical Company, etc. can be used.

In the present specification, the "C5-C9-based petroleum resin" means a resin obtained by copolymerizing the C5 fractions and the C9 fractions and may be those undergoing hydrogeneration or modification. Examples of C5 fractions and C9 fractions include the above-described petroleum fractions. As the C5-C9-based petroleum resin, for example, those commercially available from Tosoh Corporation, Zibo Luhua Hongjin New Material Co., Ltd., etc. can be used.

Examples of the rosin-based resin include, but not particularly limited to, for example, a natural resin rosin; a rosin-modified resin obtained by modifying it by hydrogenation, disproportionation, dimerization, esterification, or the like; and the like.

Examples of the phenol-based resin include, but not particularly limited to, a phenol formaldehyde resin, an alkylphenol formaldehyde resin, an alkylphenol acetylene resin, an oil-modified phenol formaldehyde resin, and the like.

A softening point of the resin component is preferably 60°C or higher, more preferably 70°C or higher, further preferably 80°C or higher, from the viewpoint of grip performance. Moreover, it is preferably 150°C or lower, more preferably 140°C or lower, further preferably 130°C or lower, from the viewpoints of processability and improvement in dispersibility of the rubber component with the filler. Besides, the softening point of the resin component is measured by the above-described measuring method.

A content of the resin component when compounded based on 100 parts by mass of the rubber component is preferably greater than 1.0 parts by mass, more preferably greater than 1.5 parts by mass, further preferably greater than 2.0 parts by mass. Moreover, it is preferably less than 40 parts by mass, more preferably less than 30 parts by mass, further preferably less than 20 parts by mass, from the viewpoint of suppression of heat generation.

Examples of oil include, for example, process oils, vegetable oils and fats, animal oils and fats, and the like. Examples of the process oils include paraffinic process oils (mineral oils), naphthenic process oils, aromatic process oils, and the like. Specific examples of the process oils include, for example, MES (Mild Extract Solvated), DAE (Distillate Aromatic Extract), TDAE (Treated Distillate Aromatic Extract), TRAE (Treated Residual Aromatic Extract), RAE (Residual Aromatic Extract), and the like. Moreover, a process oil comprising a low content of a polycyclic aromatic compound (PCA) can also be used for environmental measures. Examples of the process oil having a low PCA content include the MES, the TDAE, a heavy naphthenic oil, and the like. Moreover, from the viewpoint of a life cycle assessment, one obtained by refining a waste oil after use for a rubber mixing machine or an engine or waste cooking oil used in a cooking facility may be used.

A content of oil when compounded based on 100 parts by mass of the rubber component is preferably greater than 0.1 parts by mass, more preferably greater than 0.3 parts by mass, from the viewpoint of processability. Moreover, it is preferably less than 90 parts by mass, more preferably less than 70 parts by mass, further preferably less than 50 parts by mass, particularly preferably less than 30 parts by mass, from the viewpoint of abrasion resistance.

The liquid polymer is not particularly limited as long as it is a polymer in a liquid state at a normal temperature (25°C), examples of which include, for example, a liquid butadiene polymer (liquid BR), a liquid isoprene rubber polymer (liquid IR), a liquid styrene-butadiene copolymer (liquid SBR), a liquid styrene-isoprene rubber copolymer (liquid SIR), a copolymer including myrcene or farnesene, and the like. These liquid polymers may be used alone, or two or more thereof may be used in combination.

A content of the liquid polymer when compounded based on 100 parts by mass of the rubber component is preferably greater than 1 part by mass, more preferably greater than 3 parts by mass, further preferably greater than 5 parts by mass. Moreover, the content of the liquid polymer is preferably less than 50 parts by mass, more preferably less than 40 parts by mass, further preferably less than 30 parts by mass.

A content of the softening agent based on 100 parts by mass of the rubber component (a total amount of all of a plurality of softening agents when used in combination) is, but not particularly limited to, preferably greater than 1 part by mass, more preferably greater than 3 parts by mass, further preferably greater than 5 parts by mass. Moreover, the content is preferably less than 90 parts by mass, more preferably less than 70 parts by mass, further preferably less than 50 parts by mass, particularly preferably less than 30 parts by mass.

The wax is not particularly limited, and any of those commonly used in the tire industry can be appropriately used, examples of which include, for example, a petroleum-based wax, a mineral-based wax, a synthetic wax, and the like. The petroleum-based wax is preferable. Examples of the petroleum-based wax include, for example, a paraffin wax, a microcrystalline wax, specially selected waxes thereof, and the like. The paraffin wax is preferable. Besides, the wax relating to the present embodiment shall not include stearic acid. As a wax, for example, those commercially available from Ouchi Shinko Chemical Industry Co., Nippon Seiro Co., Ltd., PARAMELT, etc. can be used. These waxes may be used alone, or two or more thereof may be used in combination.

A content of wax when compounded based on 100 parts by mass of the rubber component is preferably greater than 0.5 parts by mass, more preferably greater than 0.8 parts by mass, from the viewpoint of weather resistance of a rubber. Moreover, it is preferably less than 10 parts by mass, more preferably less than 5.0 parts by mass, from the viewpoint of prevention of whitening of a tire due to bloom.

Examples of the antioxidant include, but not particularly limited to, for example, amine-based, quinoline-based, quinone-based, phenol-based, and imidazole-based compounds, and antioxidants such as a carbamic acid metal salt and the like, preferably phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and the like; and quinoline-based antioxidants such as poly(2,2,4-trimethyl-1,2-dihydroquinoline), 6-ethoxy-2,2,4-trimethyl-1,2-dihydroquinoline, and the like. These antioxidants may be used alone, or two or more thereof may be used in combination.

A content of the antioxidant when compounded based on 100 parts by mass of the rubber component is preferably greater than 0.5 parts by mass, more preferably greater than 0.8 parts by mass, from the viewpoint of ozone crack resistance of a rubber. Moreover, it is preferably less than 10 parts by mass, more preferably less than 5.0 parts by mass, from the viewpoint of abrasion resistance.

A content of stearic acid when compounded based on 100 parts by mass of the rubber component is preferably greater than 0.5 parts by mass, more preferably greater than 1.0 parts by mass, further preferably greater than 1.5 parts by mass, from the viewpoint of processability. Moreover, it is preferably less than 10 parts by mass, more preferably less than 5.0 parts by mass, from the viewpoint of vulcanization rate.

A content of zinc oxide when compounded based on 100 parts by mass of the rubber component is preferably greater than 0.5 parts by mass, more preferably greater than 1.0 parts by mass, further preferably greater than 1.5 parts by mass, from the viewpoint of processability. Moreover, it is preferably less than 10 parts by mass, more preferably less than 5.0 parts by mass, from the viewpoint of abrasion resistance.

Sulfur is appropriately used as a vulcanizing agent. As sulfur, a powdered sulfur, an oil processing sulfur, a precipitated sulfur, a colloidal sulfur, an insoluble sulfur, a highly dispersible sulfur, and the like can be used.

A content of sulfur when compounded as a vulcanizing agent based on 100 parts by mass of the rubber component is preferably greater than 0.1 parts by mass, more preferably greater than 0.5 parts by mass, further preferably greater than 1.0 parts by mass, from the viewpoint of securing a sufficient vulcanization reaction. Moreover, it is preferably less than 5.0 parts by mass, more preferably less than 4.0 parts by mass, further preferably less than 3.5 parts by mass, from the viewpoint of prevention of deterioration. Besides, a content of the vulcanizing agent in a case where an oil-containing sulfur is used as the vulcanizing agent shall be a total content of pure sulfur contained in the oil-containing sulfur.

Examples of vulcanizing agents other than sulfur include, for example, an alkylphenol-sulfur chloride condensate, sodium hexamethylene-1,6-bisthiosulfate dihydrate, 1,6-bis(N,N'-dibenzylthiocarbamoyldithio)hexane, and the like. As these vulcanizing agents other than sulfur, those commercially available from Taoka Chemical Co., Ltd., LANXESS, Flexsys, etc. can be used.

Examples of the vulcanization accelerator include, for example, a sulfenamide-based vulcanization accelerator, a thiazole-based vulcanization accelerator, a thiuram-based vulcanization accelerator, a guanidine-based vulcanization accelerator, a dithiocarbamic acid salt-based vulcanization accelerator, caprolactam disulfide, and the like. These vulcanization accelerators may be used alone, or two or more thereof may be used in combination. Among them, from the viewpoint that the desired effects can be more appropriately obtained, one or more vulcanization accelerators selected from the group consisting of the sulfenamide-based vulcanization accelerator, the thiazole-based vulcanization accelerator, the thiuram-based vulcanization accelerator, and the guanidine-based vulcanization accelerator are preferable, and the sulfenamide-based vulcanization accelerator is more preferable.

A vulcanization accelerator compounded in the rubber composition constituting the first layer is preferably a vulcanization accelerator comprising a sulfenamide-based vulcanization accelerator, more preferably a vulcanization accelerator comprising a sulfenamide-based vulcanization accelerator, and a thiuram-based vulcanization accelerator and/or guanidine-based vulcanization accelerator, further preferably a vulcanization accelerator comprising a sulfenamide-based vulcanization accelerator and a thiuram-based vulcanization accelerator.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like. Among them, TBBS and CBS are preferable.

Examples of the thiazole-based vulcanization accelerator include, for example, 2-mercaptobenzothiazole (MBT) or a salt thereof, di-2-benzothiazolyl disulfide (MBTS), 2-(2,4-dinitrophenyl) mercaptobenzothiazole, 2-(2,6-diethyl-4-morpholinothio) benzothiazole, and the like. Among them, the MBTS and MBT are preferable, and the MBTS is more preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenyl guanidine, 1,3-di-o-biphenyl guanidine, 1,3-di-o-cumenyl-2-propionyl guanidine, and the like. Among them, DPG is preferable.

Examples of the thiuram-based vulcanization accelerator include, for example, tetramethylthiuram disulfide (TMTD), tetrabenzylthiuram disulfide (TBzTD), tetrakis(2-ethylhexyl) thiuram disulfide (TOT-N), and the like. Among them, the tetrabenzylthiuram disulfide (TBzTD) is preferable.

A content of the vulcanization accelerator when compounded based on 100 parts by mass of the rubber component is preferably greater than 0.5 parts by mass, more preferably greater than 1.0 parts by mass, further preferable greater than 1.5 parts by mass. Moreover, the content of the vulcanization accelerator based on 100 parts by mass of the rubber component is preferably less than 8.0 parts by mass, more preferably less than 6.0 parts by mass, further preferably less than 4.0 parts by mass. When the content of the vulcanization accelerator is within the above-described ranges, there is a tendency that breaking strength and elongation can be secured.

### [Production of rubber composition and tire]

The rubber composition relating to the present embodiment can be produced by a known method. For example, it can be produced by kneading the respective above-described components with a rubber kneading machine such as an open roll, a sealed type kneader (a Banbury mixer, a kneader, and the like), and the like.

The kneading step includes, for example, a base kneading step of kneading compounding agents and additives other than a vulcanizing agent and a vulcanization accelerator; and a final kneading (F-kneading) step of adding the vulcanizing agent and the vulcanization accelerator to the kneaded product obtained in the base kneading step and kneading them. Additionally, the base kneading step can also be divided into multiple steps as necessary.

Examples of kneading conditions include, but not particularly limited to, for example, a method of kneading at a discharge temperature of 150°C to 170°C for 3 to 10 minutes in the base kneading step and kneading at 70°C to 110°C for 1 to 5 minutes in the final kneading step. Examples of vulcanization conditions include, but not particularly limited to, for example, a method of vulcanizing at 150°C to 200°C for 10 to 30 minutes.

The tire comprising the tread including the first layer 11, the second layer 12, and the third layer 13 can be produced using the above-described rubber compositions by a usual method. That is, the tire can be produced by extruding unvulcanized rubber compositions, in which the above-described components are compounded for rubber components as appropriate, into the shapes of the first layer 11, the second layer 12, and the third layer 13 with an extruder equipped with a mouthpiece having a predetermined shape, attaching them together with other tire members on a tire forming machine, and molding them by a usual method to form an unvulcanized tire, followed by heating and pressurizing this unvulcanized tire in a vulcanizing machine. Examples of vulcanization conditions include, but not particularly limited to, for example, a method of vulcanizing at 150°C to 200°C for 10 to 30 minutes.

### [Application of tire]

The tire relating to the present embodiment can be appropriately used as a heavy-duty tire. Besides, the heavy-duty tire refers to a tire that is presupposed to be mounted to a vehicle running with four wheels and that has a maximum load capacity of 1000 kg or more. The maximum load capacity of the heavy-duty tire is preferably 1200 kg or more, more preferably 1400 kg or more.

In a case where the tire relating to the present embodiment is used as a heavy-duty tire, a steel cord is preferably used as a reinforcing material for forming a carcass layer.

### EXAMPLES

Hereinafter, examples considered to be preferable in implementing the present invention (Examples) will be described, though the scope of the present invention is not limited to these Examples only. A tire comprising a first layer, a second layer, and a third layer of a tread part obtained using various chemicals described below in accordance with compounding formulations of Table 1 is examined, and results calculated based on the following evaluation methods are shown in Tables 2 and 3.

Various chemicals used in Examples and Comparative examples are collectively shown below.
NR: TSR 20
BR: Ubepol BR (Registered Trademark) 150B manufactured by Ube Industries, Ltd. (non-modified BR, cis content: 97% by mass, Mw: 440,000)
SBR: SBR1502 manufactured by JSR Corporation (non-modified E-SBR, styrene content: 23.5% by mass, Mw: 440,000, non-oil extended)
Carbon black 1: VULCAN 10H manufactured by Cabot Japan K.K. (N134, N₂SA: 144 m²/g)
Carbon black 2: SHOW BLACK N330 manufactured by Cabot Japan K.K., (N₂SA: 75 m²/g)
Silica: Ultrasil (Registered Trademark) VN3 manufactured by Evonik Degussa GmbH (N₂SA: 175 m²/g)
Silane coupling agent: Si266 manufactured by Evonik Degussa GmbH (bis(3-triethoxysilylpropyl)disulfide)
Oil: DIANA PROCESS NH-70S manufactured by Idemitsu Kosan Co., Ltd. (aromatic process oil)
Resin component: Sylvatraxx (Registered Trademark) 4401 manufactured by Kraton Corporation (copolymer of α-methylstyrene and styrene, softening point: 85°C)
Wax: OZOACE 0355 manufactured by Nippon Seiro Co., Ltd. (paraffin wax)
Antioxidant 1: Nocrac 6C manufactured by Ouchi Shinko Chemical Industry Co., Ltd. (N-(1,3-dimethylbutyl)-N'-phenyl-p-phenylenediamine)
Antioxidant 2: Nocrac RD manufactured by Ouchi Shinko Chemical Industry Co., Ltd. (poly(2,2,4-trimethyl-1,2-dihydroquinoline))
Stearic acid: Bead stearic acid "CAMELLIA" manufactured by NOF CORPORATION
Zinc oxide: Zinc oxide No. 2 manufactured by Mitsui Mining & Smelting Co., Ltd.
Sulfur: HK-200-5 manufactured by Hosoi Chemical Industry Co., Ltd. (5% oil-containing powdered sulfur)
Vulcanization accelerator 1: Nocceler NS manufactured by Ouchi Shinko Chemical Industry Co., Ltd. (N-tert-butyl-2-benzothiazolyl sulfenamide (TBBS))
Vulcanization accelerator 2: Nocceler D manufactured by Ouchi Shinko Chemical Industry Co., Ltd. (1,3-diphenylguanidine (DPG))

### (Examples and Comparative examples)

According to the compounding formulations shown in Table 1, using a 1.7 L closed Banbury mixer, chemicals other than sulfur and a vulcanization accelerator are kneaded for 1 to 10 minutes until the temperature reaches a discharge temperature of 150 to 160°C, to obtain a kneaded product. Next, using a twin-screw open roll, sulfur and the vulcanization accelerator are added to the kneaded product, and the mixture is kneaded for 4 minutes until the temperature reaches 105°C, to obtain unvulcanized rubber compositions. The unvulcanized rubber compositions are molded into shapes of a first layer, a second layer (thicknesses: 12 mm), and a third layer (thickness: 6 mm) of a tread and attached together with other tire members to produce an unvulcanized tire, and the unvulcanized tire is vulcanized at 150°C, thereby obtaining test tires listed in Table 2 and Table 3. Besides, the groove widths of circumferential grooves are set to be 5 mm and a total recessed amount of each of the circumferential grooves is set to be 2 mm.

### <Measurement of 0°C tan δ and 0°CE* >

For each vulcanized rubber test piece prepared to have a length of 20 mm, a width of 4 mm, and a thickness of 1 mm by being cut out from the inside of each rubber layer of a tread part of each test tire such that a tire circumferential direction becomes a long side and a tire radial direction becomes a thickness direction, a loss tangent tan δ and a complex elastic modulus E* are measured using a dynamic viscoelasticity measuring device (EPLEXOR series manufactured by gabo Systemtechnik GmbH) under a condition of a temperature at 0°C, a frequency of 10 Hz, an initial strain of 10%, a dynamic strain of ±2.5%, and an extension mode.

### < Measurement of glass transition temperature (Tg)>

For each vulcanized rubber test piece prepared to have a length of 20 mm, a width of 4 mm, and a thickness of 1 mm by being cut out from the inside of each rubber layer of the tread part of each test tire such that the tire circumferential direction becomes a long side and the tire radial direction becomes a thickness direction, a temperature distribution curve of tan δ in a range from -60°C to 40°C is measured using a dynamic viscoelasticity measuring device (EPLEXOR series manufactured by gabo Systemtechnik GmbH) under a condition of a frequency of 10 Hz, an initial strain of 10%, an amplitude of ±0.5%, and a temperature rising rate of 2°C/min, and a temperature corresponding to the largest value of tan δ in the obtained temperature distribution curve (tan δ peak temperature) is determined as Tg of the rubber composition.

### <Tensile test>

For a No 7. dumbbell-shaped test piece that is cut out from the inside of each rubber layer of the tread part of each test tire to have a thickness of 1 mm such that the tire circumferential direction becomes a tensile direction and the tire radial direction becomes a thickness direction, a tensile test is performed in accordance with JIS K 6251: 2017 in an atmosphere at 23°C under a condition of a tensile speed of 3.3 mm/sec, and elongation at break EB (%) is measured.

### <Wet grip performance after abrasion>

A tread part is abraded along a tread radius such that a thickness of the tread of each test tire after abrasion becomes 50% of its thickness in mint condition, these test tires are mounted on all wheels of a vehicle (2-D truck), and a braking distance from a point at which the vehicle running at a speed of 80 km/h is braked on a wet asphalt road surface is measured. An inverse value of a braking distance of each test tire is indicated as an index using the following equation with a braking distance of a control tire (Comparative example 2 in Table 2 and Comparative example 7 in Table 3) being as 100. The results show that the larger the index is, the more the wet grip performance after abrasion is maintained. (Wet grip performance index after abrasion) = (Braking distance of control tire after abrasion) / (Braking distance of each test tire after abrasion)

**Table 1**

| | First layer | | | | | Second layer | |
|---|---|---|---|---|---|---|---|
| | A1 | A2 | A3 | A4 | A5 | B1 | B2 |
| Compounding amount (part by mass) | | | | | | | |
| NR | 80 | 80 | 80 | 70 | 80 | 50 | 50 |
| BR | 20 | 20 | 20 | 20 | 20 | 50 | 50 |
| SBR | - | - | - | 10 | - | - | - |
| Carbon black 1 | 50 | 52 | 54 | 54 | 31 | 40 | 40 |
| Carbon black 2 | - | - | - | - | - | - | - |
| Silica | - | 4 | 6 | 6 | 19 | 12.5 | 18 |
| Silane coupling agent | - | 0.4 | 0.6 | 0.6 | 1.9 | 1.25 | 1.8 |
| Oil | 1.5 | 1.5 | 1.5 | 1.5 | 1.5 | 1.5 | 1.5 |
| Resin component | - | - | - | - | - | - | - |
| Wax | 1.0 | 1.0 | 1.0 | 1.0 | 1.0 | 1.3 | 1.3 |
| Antioxidant 1 | 1.5 | 1.5 | 1.5 | 1.5 | 1.5 | 1.5 | 1.5 |
| Antioxidant 2 | 0.5 | 0.5 | 0.5 | 0.5 | 0.5 | 0.5 | 0.5 |
| Stearic acid | 2.5 | 2.5 | 2.5 | 2.5 | 2.5 | 2.5 | 2.5 |
| Zinc oxide | 3.0 | 3.0 | 3.0 | 3.0 | 3.0 | 3.0 | 3.0 |
| Sulfur | 1.3 | 1.3 | 1.3 | 1.3 | 1.3 | 1.2 | 1.2 |
| Vulcanization accelerator 1 | 1.6 | 1.6 | 1.6 | 1.6 | 1.6 | 1.4 | 1.4 |
| Vulcanization accelerator 2 | - | - | - | - | - | 0.2 | 0.2 |
| 0°C tan δ | 0.23 | 0.24 | 0.25 | 0.26 | 0.20 | 0.20 | 0.21 |
| 0°CE* (MPa) | 13.4 | 16.2 | 18.9 | 20.2 | 10.2 | 11.9 | 14.6 |
| Tg (°C) | -52 | -53 | -53 | -51 | -52 | -52 | -52 |
| EB (%) | 550 | 540 | 520 | 500 | 600 | 540 | 520 |

| | | | | | | | |
|---|---|---|---|---|---|---|---|
| N.T.: Not tested - continued - | | | | | | | |

**- continued -**

| | Second layer | | | | | | Third layer |
|---|---|---|---|---|---|---|---|
| | B3 | B4 | B5 | B6 | B7 | B8 | C1 |
| Compounding amount (part by mass) | | | | | | | |
| NR | 50 | 50 | 50 | 60 | 50 | 50 | 100 |
| BR | 50 | 40 | 20 | 10 | 50 | 50 | - |
| SBR | - | 10 | 30 | 30 | - | - | - |
| Carbon black 1 | 35 | 35 | 35 | 35 | 40 | 40 | - |
| Carbon black 2 | - | - | - | - | - | - | 42 |
| Silica | 30 | 30 | 30 | 30 | - | 10 | - |
| Silane coupling agent | 3.0 | 3.0 | 3.0 | 3.0 | - | 1.0 | - |
| Oil | 1.5 | 1.5 | 1.5 | 1.5 | 1.5 | 1.5 | 0.5 |
| Resin component | - | - | - | - | - | - | 2.0 |
| Wax | 1.3 | 1.3 | 1.3 | 1.3 | 1.3 | 1.3 | - |
| Antioxidant 1 | 1.5 | 1.5 | 1.5 | 1.5 | 1.5 | 1.5 | 1.0 |
| Antioxidant 2 | 0.5 | 0.5 | 0.5 | 0.5 | 0.5 | 0.5 | - |
| Stearic acid | 2.5 | 2.5 | 2.5 | 2.5 | 2.5 | 2.5 | 2.0 |
| Zinc oxide | 3.0 | 3.0 | 3.0 | 3.0 | 3.0 | 3.0 | 2.0 |
| Sulfur | 1.2 | 1.2 | 1.2 | 1.2 | 1.2 | 1.2 | 1.6 |
| Vulcanization accelerator 1 | 1.4 | 1.4 | 1.4 | 1.4 | 1.4 | 1.4 | 1.2 |
| Vulcanization accelerator 2 | 0.2 | 0.2 | 0.2 | 0.2 | 0.2 | 0.2 | - |
| 0°C tan δ | 0.22 | 0.24 | 0.27 | 0.29 | 0.19 | 0.20 | 0.29 |
| 0°CE* (MPa) | 18.7 | 19.9 | 22.6 | 23.0 | 8.1 | 10.8 | 11.0 |
| Tg (°C) | -52 | -51 | -50 | -50 | -51 | -52 | N.T. |
| EB (%) | 530 | 520 | 530 | 540 | 570 | 540 | N.T. |

| | | | | | | | |
|---|---|---|---|---|---|---|---|
| N.T.: Not tested | | | | | | | |

**Table 2: Test tire 1 (size: 225/80R17.5)**

| | Example | | | | | | | | |
|---|---|---|---|---|---|---|---|---|---|
| | 1 | 2 | 3 | 4 | 5 | 6 | 7 | 8 | 9 |
| First layer compounding | A1 | A1 | A1 | A1 | A1 | A1 | A2 | A3 | A4 |
| Second layer compounding | B1 | B2 | B3 | B4 | B5 | B6 | B6 | B6 | B6 |
| Third layer compounding | C1 | C1 | C1 | C1 | C1 | C1 | C1 | C1 | C1 |

| First layer | | | | | | | | | |
|---|---|---|---|---|---|---|---|---|---|
| S1 (part by mass) | 0 | 0 | 0 | 0 | 0 | 0 | 4 | 6 | 6 |
| 0°C tan δ | 0.23 | 0.23 | 0.23 | 0.23 | 0.23 | 0.23 | 0.24 | 0.24 | 0.26 |
| 0°CE* (MPa) | 13.4 | 13.4 | 13.4 | 13.4 | 13.4 | 13.4 | 16.2 | 18.9 | 20.2 |
| Tg (°C) | -52 | -52 | -52 | -52 | -52 | -52 | -53 | -53 | -51 |
| EB (%) | 550 | 550 | 550 | 550 | 550 | 550 | 540 | 520 | 500 |

| Second layer | | | | | | | | | |
|---|---|---|---|---|---|---|---|---|---|
| S2 (part by mass) | 12.5 | 18 | 30 | 30 | 30 | 30 | 30 | 30 | 30 |
| 0°C tan δ | 0.20 | 0.21 | 0.22 | 0.24 | 0.27 | 0.29 | 0.29 | 0.29 | 0.29 |
| 0°CE* (MPa) | 11.9 | 14.6 | 18.7 | 19.9 | 22.6 | 23.0 | 23.0 | 23.0 | 23.0 |
| Tg (°C) | -52 | -52 | -52 | -51 | -50 | -50 | -50 | -50 | -50 |
| EB (%) | 540 | 520 | 530 | 520 | 530 | 540 | 540 | 540 | 540 |

| Tire | | | | | | | | | |
|---|---|---|---|---|---|---|---|---|---|
| Dt (mm) | 0.81 | 0.81 | 0.81 | 0.81 | 0.81 | 0.81 | 0.81 | 0.81 | 0.81 |
| t1 (mm) | 10 | 10 | 10 | 10 | 10 | 10 | 10 | 10 | 10 |
| H (mm) | 20 | 20 | 20 | 20 | 20 | 20 | 20 | 20 | 20 |
| t1/H | 0.50 | 0.50 | 0.50 | 0.50 | 0.50 | 0.50 | 0.50 | 0.50 | 0.50 |
| Cross section of circumferential groove | FIG. 2 | FIG. 2 | FIG. 2 | FIG.2 | FIG. 2 | FIG. 2 | FIG. 2 | FIG. 2 | FIG. 2 |
| L (mm) | 0 | 0 | 0 | 0 | 0 | 0 | 0 | 0 | 0 |
| S1/S2 | 0 | 0 | 0 | 0 | 0 | 0 | 0.13 | 0.20 | 0.20 |
| S2×Dt | 10.1 | 14.6 | 24.3 | 24.3 | 24.3 | 24.3 | 24.3 | 24.3 | 24.3 |
| 0°C tan δ1×Dt | 0.19 | 0.19 | 0.19 | 0.19 | 0.19 | 0.19 | 0.19 | 0.19 | 0.21 |
| Wet grip performance index | 102 | 106 | 108 | 113 | 120 | 126 | 130 | 133 | 135 |

| | Example | | | Comparative example | | | | |
|---|---|---|---|---|---|---|---|---|
| | 10 | 11 | 12 | 1 | 2 | 3 | 4 | 5 |
| First layer compounding | A5 | A4 | A4 | A1 | A1 | A5 | A1 | A1 |
| Second layer compounding | B6 | B6 | B6 | B7 | B8 | B2 | B2 | B1 |
| Third layer compounding | C1 | C1 | C1 | C1 | C1 | C1 | C1 | - |

| First layer | | | | | | | | |
|---|---|---|---|---|---|---|---|---|
| S1 (part by mass) | 19 | 6 | 6 | 0 | 0 | 19 | 0 | 0 |
| 0°C tan δ | 0.20 | 0.26 | 0.26 | 0.23 | 0.23 | 0.20 | 0.23 | 0.23 |
| 0°CE* (MPa) | 10.2 | 20.2 | 20.2 | 13.4 | 13.4 | 10.2 | 13.4 | 13.4 |
| Tg (°C) | -52 | -51 | -51 | -52 | -52 | -52 | -52 | -52 |
| EB (%) | 600 | 500 | 500 | 550 | 550 | 600 | 550 | 550 |

| Second layer | | | | | | | | |
|---|---|---|---|---|---|---|---|---|
| S2 (part by mass) | 30 | 30 | 30 | 0 | 10 | 18 | 18 | 12.5 |
| 0°C tan δ | 0.29 | 0.29 | 0.29 | 0.19 | 0.20 | 0.21 | 0.21 | 0.20 |
| 0°CE* (MPa) | 23.0 | 23.0 | 23.0 | 8.1 | 10.8 | 14.6 | 14.6 | 11.9 |
| Tg (°C) | -50 | -50 | -50 | -51 | -52 | -52 | -52 | -52 |
| EB (%) | 540 | 540 | 540 | 570 | 540 | 520 | 520 | 540 |

| Tire | | | | | | | | |
|---|---|---|---|---|---|---|---|---|
| Dt (mm) | 0.81 | 0.81 | 0.81 | 0.81 | 0.81 | 0.81 | 0.79 | 0.81 |
| t1 (mm) | 10 | 10 | 10 | 10 | 10 | 10 | 10 | 10 |
| H (mm) | 20 | 20 | 20 | 20 | 20 | 20 | 20 | 20 |
| t1/H | 0.50 | 0.50 | 0.50 | 0.50 | 0.50 | 0.50 | 0.50 | 0.50 |
| Cross section of circumferential groove | FIG. 2 | FIG. 2 | FIG. 3 | FIG. 2 | FIG. 2 | FIG. 2 | FIG. 2 | FIG. 2 |
| L (mm) | 0 | 0 | 15 | 0 | 0 | 0 | 0 | 0 |
| S1/S2 | 0.63 | 0.20 | 0.20 | - | 0 | 1.05 | 0 | 0 |
| S2×Dt | 24.3 | 24.3 | 24.3 | 0 | 8.1 | 14.6 | 14.2 | 10.1 |
| 0°C tan δ1×Dt | 0.16 | 0.21 | 0.21 | 0.19 | 0.19 | 0.16 | 0.18 | 0.19 |
| Wet grip performance index | 138 | 141 | 144 | 99 | 100 | 100 | 82 | 87 |

**Table 3: Test tire 2 (size: 275/80R22.5)**

| | Example | | | | | | | | |
|---|---|---|---|---|---|---|---|---|---|
| | 13 | 14 | 15 | 16 | 17 | 18 | 19 | 20 | 21 |
| First layer | A1 | A1 | A1 | A1 | A1 | A1 | A2 | A3 | A4 |
| Second layer | B1 | B2 | B3 | B4 | B5 | B6 | B6 | B6 | B6 |
| Third layer | C1 | C1 | C1 | C1 | C1 | C1 | C1 | C1 | C1 |

| First layer | | | | | | | | | |
|---|---|---|---|---|---|---|---|---|---|
| S1 (part by mass) | 0 | 0 | 0 | 0 | 0 | 0 | 4 | 6 | 6 |
| 0°C tan δ | 0.23 | 0.23 | 0.23 | 0.23 | 0.23 | 0.23 | 0.24 | 0.24 | 0.26 |
| 0°CE* (MPa) | 13.4 | 13.4 | 13.4 | 13.4 | 13.4 | 13.4 | 16.2 | 18.9 | 20.2 |
| Tg (°C) | -52 | -52 | -52 | -52 | -52 | -52 | -53 | -53 | -51 |
| EB (%) | 550 | 550 | 550 | 550 | 550 | 550 | 540 | 520 | 500 |

| Second layer | | | | | | | | | |
|---|---|---|---|---|---|---|---|---|---|
| S2 (part by mass) | 12.5 | 18 | 30 | 30 | 30 | 30 | 30 | 30 | 30 |
| 0°C tan δ | 0.20 | 0.21 | 0.22 | 0.24 | 0.27 | 0.29 | 0.29 | 0.29 | 0.29 |
| 0°CE* (MPa) | 11.9 | 14.6 | 18.7 | 19.9 | 22.6 | 23.0 | 23.0 | 23.0 | 23.0 |
| Tg (°C) | -52 | -52 | -52 | -51 | -50 | -50 | -50 | -50 | -50 |
| EB (%) | 540 | 520 | 530 | 520 | 530 | 540 | 540 | 540 | 540 |

| Tire | | | | | | | | | |
|---|---|---|---|---|---|---|---|---|---|
| Dt (mm) | 1.00 | 1.00 | 1.00 | 1.00 | 1.00 | 1.00 | 1.00 | 1.00 | 1.00 |
| t1 (mm) | 15 | 15 | 15 | 15 | 15 | 15 | 15 | 15 | 15 |
| H (mm) | 25 | 25 | 25 | 25 | 25 | 25 | 25 | 25 | 25 |
| t1/H | 0.60 | 0.60 | 0.60 | 0.60 | 0.60 | 0.60 | 0.60 | 0.60 | 0.60 |
| Cross section of circumferential groove | FIG. 2 | FIG. 2 | FIG. 2 | FIG. 2 | FIG. 2 | FIG. 2 | FIG. 2 | FIG. 2 | FIG. 2 |
| L (mm) | 0 | 0 | 0 | 0 | 0 | 0 | 0 | 0 | 0 |
| S1/S2 | 0 | 0 | 0 | 0 | 0 | 0 | 0.13 | 0.20 | 0.20 |
| S2×Dt | 12.5 | 18 | 30 | 30 | 30 | 30 | 30 | 30 | 30 |
| 0°C tan δ1×Dt | 0.23 | 0.23 | 0.23 | 0.23 | 0.23 | 0.23 | 0.24 | 0.24 | 0.26 |
| Wet grip performance index | 102 | 132 | 134 | 140 | 149 | 154 | 160 | 163 | 166 |

| | Example | | | Comparative example | | | |
|---|---|---|---|---|---|---|---|
| | 22 | 23 | 24 | 6 | 7 | 8 | 9 |
| First layer | A5 | A4 | A4 | A1 | A1 | A5 | A1 |
| Second layer | B6 | B6 | B6 | B7 | B8 | B2 | B1 |
| Third layer | C1 | C1 | C1 | C1 | C1 | C1 | - |

| First layer | | | | | | | |
|---|---|---|---|---|---|---|---|
| S1 (part by mass) | 19 | 6 | 6 | 0 | 0 | 19 | 0 |
| 0°C tan δ | 0.20 | 0.26 | 0.26 | 0.23 | 0.23 | 0.20 | 0.23 |
| 0°CE* (MPa) | 10.2 | 20.2 | 20.2 | 13.4 | 13.4 | 10.2 | 13.4 |
| Tg (°C) | -52 | -51 | -51 | -52 | -52 | -51 | -52 |
| EB (%) | 600 | 500 | 500 | 550 | 550 | 600 | 550 |

| Second layer | | | | | | | |
|---|---|---|---|---|---|---|---|
| S2 (part by mass) | 30 | 30 | 30 | 0 | 10 | 18 | 12.5 |
| 0°C tan δ | 0.29 | 0.29 | 0.29 | 0.19 | 0.20 | 0.21 | 0.20 |
| 0°CE* (MPa) | 23.0 | 23.0 | 23.0 | 8.1 | 10.8 | 14.6 | 11.9 |
| Tg (°C) | -50 | -50 | -50 | -51 | -52 | -52 | -52 |
| EB (%) | 540 | 540 | 540 | 570 | 540 | 520 | 540 |

| Tire | | | | | | | |
|---|---|---|---|---|---|---|---|
| Dt (mm) | 1.00 | 1.00 | 1.00 | 1.00 | 1.00 | 1.00 | 1.00 |
| t1 (mm) | 15 | 15 | 15 | 15 | 15 | 15 | 15 |
| H (mm) | 25 | 25 | 25 | 25 | 25 | 25 | 25 |
| t1/H | 0.60 | 0.60 | 0.60 | 0.60 | 0.60 | 0.60 | 0.60 |
| Cross section of circumferential groove | FIG. 2 | FIG. 2 | FIG. 3 | FIG. 2 | FIG. 2 | FIG. 2 | FIG. 2 |
| L (mm) | 0 | 0 | 20 | 0 | 0 | 0 | 0 |
| S1/S2 | 0.63 | 0.20 | 0.20 | - | 0 | 1.05 | 0 |
| S2×Dt | 30 | 30 | 30 | 0 | 10 | 18 | 12.5 |
| 0°C tan δ1×Dt | 0.20 | 0.26 | 0.26 | 0.23 | 0.23 | 0.20 | 0.23 |
| Wet grip performance index | 169 | 172 | 176 | 99 | 100 | 100 | 87 |

### REFERENCE SIGNS LIST

- 1: Tread part
- 2: Groove edge
- 3: Center circumferential groove
- 4: Middle circumferential groove
- 5: Shoulder circumferential groove
- 6: Center land part
- 7: Middle land part
- 8: Shoulder land part
- 9: Recessed part
- 10: Groove wall
- 11: First layer
- 12: Second layer
- 13: Third layer
- 14: Tread surface
- 19: Center lateral groove
- 20: Middle lateral groove
- 21: Shoulder lateral groove
- 22: Center sipe
- Te: Grounding end

## Claims

1. A heavy-duty tire comprising a tread part (1),
wherein the tread part (1) comprises a plurality of circumferential grooves (3) extending continuously in a tire circumferential direction,
wherein the tread part (1) at least comprises
a first layer (11) constituting a tread surface (14),
a second layer (12) adjacent to the inner side of the first layer (11) in a radial direction, and
a third layer (13) present on the inner side of the second layer (12) in the radial direction,
wherein each of the first layer (11), the second layer (12), and the third layer (13) is composed of a rubber composition comprising a rubber component and a filler,
**characterized in that**
Dt is 0.80 or more, preferably 1.00 or more, t1/H is 0.90 or less, S1/S2 is less than 1.0, and a product (S2×Dt) of S2 and Dt is greater than 10.0, where a tire outer diameter is referred to as Dt, in m, a thickness of the first layer is referred to as t1, in mm, a groove depth at a deepest part of the circumferential grooves (3, 4, 5) is referred to as H, in mm, a content of silica based on 100 parts by mass of a rubber component in a rubber composition constituting the first layer is referred to as S1, in parts by mass, and a content of silica based on 100 parts by mass of a rubber component in a rubber composition constituting the second layer is referred to as S2, in parts by mass.

2. The heavy-duty tire of claim 1, wherein a content of silica in the filler contained in the rubber composition constituting the second layer (12) is 30% by mass or more.

3. The heavy-duty tire of claim 1 or 2, wherein S2 is 30 or more.

4. The heavy-duty tire of any one of claims 1 to 3, wherein the rubber component contained in the rubber composition constituting the second layer (12) comprises 10% by mass or more, preferably 30% by mass or more of a styrene-butadiene rubber.

5. The heavy-duty tire of any one of claims 1 to 4, wherein the rubber component contained in the rubber composition constituting the second layer (12) comprises 60% by mass or more of an isoprene-based rubber.

6. The heavy-duty tire of any one of claims 1 to 5, wherein the rubber composition constituting the first layer (11) comprises silica.

7. The heavy-duty tire of any one of claims 1 to 6, wherein a content of silica in the filler contained in the rubber composition constituting the first layer (11) is 10% by mass or more.

8. The tire of any one of claims 1 to 7, wherein elongation the rubber component contained in the rubber composition constituting the first layer (11) comprises 10% by mass or more of a styrene-butadiene rubber.

9. The tire of any one of claims 1 to 8, wherein a tan δ at 0°C of the rubber composition constituting the first layer (11) (0°C tan δ1), measured using a dynamic viscoelasticity measuring device under a condition of a temperature at 0°C, a frequency of 10 Hz, an initial strain of 10%, a dynamic strain of ±2.5%, and an extension mode, is 0.24 or more.

10. The tire of any one of claims 1 to 9, wherein a complex elastic modulus at 0°C of the rubber composition constituting the first layer (11) (0°CE*1), measured using a dynamic viscoelasticity measuring device under a condition of a temperature at 0°C, a frequency of 10 Hz, an initial strain of 10%, a dynamic strain of ±2.5%, and an extension mode, is 10.0 MPa or more.

11. The tire of any one of claims 1 to 10, wherein, when a glass transition temperature of the rubber composition constituting the first layer (11) is -60°C or higher, wherein the glass transition temperature is obtained by the following method: a temperature distribution curve of tan δ in a range from -60°C to 40°C is measured using a dynamic viscoelasticity measuring device under a condition of a frequency of 10 Hz, an initial strain of 10%, an amplitude of ±0.5%, and a temperature rising rate of 2°C/min, and a temperature corresponding to the largest value of tan δ, tan δ peak temperature, in the obtained temperature distribution curve is determined as glass transition temperature.

12. The tire of any one of claims 1 to 11, wherein an elongation at break of the rubber composition constituting the first layer (11) is 500% or more, wherein the elongation at break is an elongation at break in %, measured under a condition of a tensile speed of 3.3 mm/sec, in an atmosphere at 23°C, in accordance with JIS K 6251:2017.

13. The tire of any one of claims 1 to 12, wherein a product (0°C tan δ1×Dt) of 0°C tan δ1 and Dt is 0.18 or more, where a tan δ at 0°C of the rubber composition constituting the first layer (11) is referred to as 0°C tan δ1 and is measured using a dynamic viscoelasticity measuring device under a condition of a temperature at 0°C, a frequency of 10 Hz, an initial strain of 10%, a dynamic strain of ±2.5%, and an extension mode.

14. The tire of any one of claims 1 to 13, wherein at least one groove wall (10) of each of the circumferential grooves (3, 4, 5) is provided with a recessed part (9) that is recessed outward in a groove width direction with respect to a groove edge (2) appearing on a grounding surface of the tread part (1).

15. The tire of claim 14, wherein L/t1 is greater than 1.0, where a distance, from an end on the outer side of the recessed part (9) in the tire radial direction to the tread surface, of the circumferential groove (3, 4, 5) whose groove wall (10) is provided with the recessed part (9) that is recessed outward in the groove width direction with respect to the groove edge (2) appearing on the grounding surface of the tread part (1) is referred to as L.

## Patentansprüche

1. Schwerlastreifen, umfassend einen Laufstreifenteil (1),
wobei der Laufstreifenteil (1) eine Mehrzahl an Umfangsrillen (3) umfasst, die sich durchgehend in einer Reifenumfangsrichtung erstrecken,
wobei der Laufstreifenteil mindestens umfasst:
eine erste Schicht (11), die eine Laufstreifenoberfläche (14) bildet,
eine zweite Schicht (12), die der inneren Seite der ersten Schicht (11) in einer Radialrichtung benachbart ist, und
eine dritte Schicht (13), die auf der inneren Seite der zweiten Schicht (12) in der Radialrichtung vorhanden ist,
wobei jede der ersten Schicht (11), der zweiten Schicht (12) und der dritten Schicht (13) mit einer Kautschukzusammensetzung aufgebaut ist, die eine Kautschukkomponente und einen Füllstoff umfasst, **dadurch gekennzeichnet, dass**
Dt 0,80 oder mehr beträgt, bevorzugt 1,00 oder mehr, t1/H 0,90 oder weniger beträgt, S1/S2 weniger als 1,0 beträgt, und ein Produkt (S2×Dt) von S2 und Dt größer als 10,0 ist, worin ein Reifenaußendurchmesser als Dt, in m, bezeichnet ist, eine Dicke der ersten Schicht als t1, in mm, bezeichnet ist, eine Rillentiefe bei einem tiefsten Teil der Umfangsrillen (3, 4, 5) als H, in mm, bezeichnet ist, ein Gehalt an Siliziumdioxid bezogen auf 100 Massenteile einer Kautschukkomponente in einer Kautschukzusammensetzung, welche die erste Schicht bildet, als S1, in Massenteilen, bezeichnet ist, und ein Gehalt an Siliziumdioxid bezogen auf 100 Massenteile einer Kautschukkomponente in einer Kautschukzusammensetzung, welche die zweite Schicht bildet, als S2, in Massenteilen, bezeichnet ist.

2. Schwerlastreifen nach Anspruch 1, wobei ein Gehalt an Siliziumdioxid in dem Füllstoff, der in der Kautschukzusammensetzung enthalten ist, welche die zweite Schicht (12) bildet, 30 Massen-% oder mehr beträgt.

3. Schwerlastreifen nach Anspruch 1 oder 2, wobei S2 30 oder mehr beträgt.

4. Schwerlastreifen nach einem der Ansprüche 1 bis 3, wobei die Kautschuckomponente, die in der Kautschukzusammensetzung enthalten ist, welche die zweite Schicht (12) bildet, 10 Massen-% oder mehr, bevorzugt 30 Massen-% oder mehr, eines Styrol-Butadien-Kautschuks umfasst.

5. Schwerlastreifen nach einem der Ansprüche 1 bis 4, wobei die Kautschukkomponente, die in der Kautschukzusammensetzung enthalten ist, welche die zweite Schicht (12) bildet, 60 Massen-% oder mehr eines Isopren-basierten Kautschuks umfasst.

6. Schwerlastreifen nach einem der Ansprüche 1 bis 5, wobei die Kautschukzusammensetzung, welche die erste Schicht (11) bildet, Siliziumdioxid umfasst.

7. Schwerlastreifen nach einem der Ansprüche 1 bis 6, wobei ein Gehalt an Siliziumdioxid in dem Füllstoff, der in der Kautschukzusammensetzung enthalten ist, welche die erste Schicht (11) bildet, 10 Massen-% oder mehr beträgt.

8. Reifen nach einem der Ansprüche 1 bis 7, wobei Dehnung die Kautschukkomponente, die in der Kautschukzusammensetzung enthalten ist, welche die erste Schicht (11) bildet, 10 Massen-% oder mehr eines Styrol-Butadien-Kautschuks umfasst.

9. Reifen nach einem der Ansprüche 1 bis 8, wobei ein tan δ bei 0°C der Kautschukzusammensetzung, welche die erste Schicht (11) bildet (0°C tan δ1), gemessen unter Verwendung einer Messvorrichtung für dynamische Viskoelastizität unter Bedingungen einer Temperatur bei 0°C, einer Frequenz von 10 Hz, einer anfänglichen Dehnung von 10%, einer dynamischen Dehnung von ±2,5% und eines Streckmodus, 0,24 oder mehr beträgt.

10. Reifen nach einem der Ansprüche 1 bis 9, wobei ein komplexer Elastizitätsmodul bei 0°C der Kautschukzusammensetzung, welche die erste Schicht (11) bildet (0°CE*1), gemessen unter Verwendung einer Messvorrichtung für dynamische Viskoelastizität unter Bedingungen einer Temperatur bei 0°C, einer Frequenz von 10 Hz, einer anfänglichen Dehnung von 10%, einer dynamischen Dehnung von ±2,5% und eines Streckmodus, 10,0 MPa oder mehr beträgt.

11. Reifen nach einem der Ansprüche 1 bis 10, wobei, wenn eine Glasübergangstemperatur der Kautschukzusammensetzung, welche die erste Schicht (11) bildet, -60°C oder höher ist, wobei die Glasübergangstemperatur durch das folgende Verfahren erhalten ist: eine Temperaturverteilungskurve von tan δ in einem Bereich von -60°C bis 40°C wird unter Verwendung einer Messvorrichtung für dynamische Viskoelastizität unter Bedingungen einer Frequenz von 10 Hz, einer anfänglichen Dehnung von 10%, einer Amplitude von ±0,5% und einer Temperaturanstiegsrate von 2°C/min gemessen, und eine Temperatur, die dem größten Wert von tan δ entspricht, tan δ-Peak-Temperatur, in der erhaltenen Temperaturverteilungskurve wird als Glasübergangstemperatur bestimmt.

12. Reifen nach einem der Ansprüche 1 bis 11, wobei eine Bruchdehnung der Kautschukzusammensetzung, welche die erste Schicht (11) bildet, 500% oder mehr beträgt, wobei die Bruchdehnung eine Bruchdehnung in % ist, gemessen unter Bedingungen einer Zuggeschwindigkeit von 3,3 mm/Sek, in einer Atmosphäre bei 23°C, gemäß JIS K 6251:2017.

13. Reifen nach einem der Ansprüche 1 bis 12, wobei ein Produkt (0°C tan δ1×Dt) von 0°C tan δ1 und Dt 0,18 oder mehr beträgt, worin ein tan δ bei 0°C der Kautschukzusammensetzung, welche die erste Schicht (11) bildet, als 0°C tan δ1 bezeichnet ist und unter Verwendung einer Messvorrichtung für dynamische Viskoelastizität unter Bedingungen einer Temperatur bei 0°C, einer Frequenz von 10 Hz, einer anfänglichen Dehnung von 10%, einer dynamischen Dehnung von ±2,5% und eines Streckmodus gemessen ist.

14. Reifen nach einem der Ansprüche 1 bis 13, wobei mindestens eine Rillenwand (10) jeder der Umfangsrillen (3, 4, 5) mit einem zurückversetzten Teil (9) versehen ist, der in einer Rillenbreitenrichtung nach außen zurückversetzt ist in Bezug auf eine Rillenkante (2), die auf einer Bodenkontaktoberfläche des Laufstreifenteils (1) erscheint.

15. Reifen nach Anspruch 14, wobei L/t1 größer als 1,0 ist, worin ein Abstand, von einem Ende auf der äußeren Seite des zurückversetzten Teils (9) in der Reifenradialrichtung zu der Laufstreifenoberfläche, der Umfangsrille (3, 4, 5), deren Rillenwand (10) mit dem zurückversetzten Teil (9) versehen ist, der in der Rillenbreitenrichtung nach außen zurückversetzt ist in Bezug auf die Rillenkante (2), die auf der Bodenkontaktoberfläche des Laufstreifenteils (1) erscheint, als L bezeichnet ist.

## Revendications

1. Pneu poids lourd comprenant une partie bande de roulement (1),
dans lequel la partie bande de roulement (1) comprend une pluralité de rainures circonférentielles (3) s'étendant en continu dans une direction circonférentielle de pneu,
dans lequel la partie bande de roulement (1) comprend au moins
une première couche (11) constituant une surface de bande de roulement (14),
une deuxième couche (12) adjacente au côté intérieur de la première couche (11) dans une direction radiale, et
une troisième couche (13) présente sur le côté intérieur de la deuxième couche (12) dans la direction radiale,
dans lequel chacune parmi la première couche (11), la deuxième couche (12) et la troisième couche (13) est composée d'une composition de caoutchouc comprenant un composant de caoutchouc et une charge,
**caractérisé en ce que**
Dt est égal ou supérieur à 0,80, de préférence égal ou supérieur à 1,00, t1/H est inférieur ou égal à 0,90, S1/S2 est inférieur à 1,0, et le produit (S2 × Dt) de S2 et de Dt est supérieur à 10,0, où le diamètre extérieur de pneu est désigné par Dt, en m, l'épaisseur de la première couche est désignée par t1, en mm, la profondeur de rainure au niveau de la partie la plus profonde des rainures circonférentielles (3, 4, 5) est désignée par H, en mm, la teneur en silice sur la base de 100 parties en masse de composant de caoutchouc dans une composition de caoutchouc constituant la première couche est désignée par S1, en parties en masse, et la teneur en silice sur la base de 100 parties en masse de composant de caoutchouc dans la composition de caoutchouc constituant la deuxième couche est désignée par S2, en parties en masse.

2. Pneu poids lourd selon la revendication 1, dans lequel la teneur en silice dans la charge contenue dans la composition de caoutchouc constituant la deuxième couche (12) est égale ou supérieure à 30 % en masse.

3. Pneu poids lourd selon la revendication 1 ou la revendication 2, dans lequel S2 est égal ou supérieur à 30.

4. Pneu poids lourd selon l'une quelconque des revendications 1 à 3, dans lequel le composant de caoutchouc contenu dans la composition de caoutchouc constituant la deuxième couche (12) comprend 10 % en masse ou plus, de préférence 30 % en masse ou plus de caoutchouc styrène butadiène.

5. Pneu poids lourd selon l'une quelconque des revendications 1 à 4, dans lequel le composant de caoutchouc contenu dans la composition de caoutchouc constituant la deuxième couche (12) comprend 60 % en masse ou plus d'un caoutchouc à base d'isoprène.

6. Pneu poids lourd selon l'une quelconque des revendications 1 à 5, dans lequel la composition de caoutchouc constituant la première couche (11) comprend de la silice.

7. Pneu poids lourd selon l'une quelconque des revendications 1 à 6, dans lequel la teneur en silice dans la charge contenue dans la composition de caoutchouc constituant la première couche (11) est égale ou supérieure à 10 % en masse.

8. Pneu selon l'une quelconque des revendications 1 à 7, dans lequel allongement le composant de caoutchouc contenu dans la composition de caoutchouc constituant la première couche (11) comprend 10 % en masse ou plus de caoutchouc styrène butadiène.

9. Pneu selon l'une quelconque des revendications 1 à 8, dans lequel la tan δ à 0 °C de la composition de caoutchouc constituant la première couche (11) (tan δ à 0 °C), mesurée en utilisant un dispositif de mesure de la viscoélasticité dynamique dans des conditions de température de 0 °C, une fréquence de 10 Hz, une contrainte initiale de 10 %, une contrainte dynamique de ±2,5 %, et en mode extension, est égale ou supérieure à 0,24.

10. Pneu selon l'une quelconque des revendications 1 à 9, dans lequel le module élastique complexe à 0 °C de la composition de caoutchouc constituant la première couche (11) (E*1 à 0 °C), mesuré en utilisant un dispositif de mesure de la viscoélasticité dynamique dans des conditions de température de 0 °C, une fréquence de 10 Hz, une contrainte initiale de 10 %, une contrainte dynamique de ± 2,5 %, et en mode extension, est égal ou supérieur à 10,0 MPa.

11. Pneu selon l'une quelconque des revendications 1 à 10, dans lequel, lorsqu'une température de transition vitreuse de la composition de caoutchouc constituant la première couche (11) est égale ou supérieure à -60 °C, dans lequel la température de transition vitreuse est obtenue par la méthode suivante : une courbe de distribution de température de tan δ dans une plage de -60 °C à 40 °C est mesurée en utilisant un dispositif de mesure de la viscoélasticité dynamique dans des conditions avec une fréquence de 10 Hz, une contrainte initiale de 10 %, une amplitude de ±0,5 %, et un gradient de température de 2 °C/min, et une température correspondant à la valeur la plus élevée de tan δ, température au pic de tan δ, dans la courbe de distribution de température obtenue est déterminée comme étant la température de transition vitreuse.

12. Pneu selon l'une quelconque des revendications 1 à 11, dans lequel un allongement à la rupture de la composition de caoutchouc constituant la première couche (11) est égal ou supérieur à 500 %, dans lequel l'allongement à la rupture est un allongement à la rupture en %, mesuré dans des conditions de vitesse de traction de 3,3 mm/sec, dans une atmosphère à 23 °C, en accord avec la norme JIS K 6251:2017.

13. Pneu selon l'une quelconque des revendications 1 à 12, dans lequel le produit (tan δ à 0 °C × Dt) de la tan δ à 0 °C et de Dt est égal ou supérieur à 0,18, où la tan δ à 0 °C de la composition de caoutchouc constituant la première couche (11) est désignée par tan δ à 0 °C et est mesurée en utilisant un dispositif de mesure de la viscoélasticité dynamique dans des conditions de température de 0 °C, une fréquence de 10 Hz, une contrainte initiale de 10 %, une contrainte dynamique de ± 2,5 %, et en mode extension.

14. Pneu selon l'une quelconque des revendications 1 à 13, dans lequel au moins une paroi de rainure (10) de chacune des rainures circonférentielles (3, 4, 5) est pourvue d'une partie en retrait (9) qui est en retrait extérieur dans une direction de largeur de rainure par rapport à un bord de rainure (2) apparaissant sur une surface au sol de la partie bande de roulement (1).

15. Pneu selon la revendication 14, dans lequel L/t1 est supérieur à 1,0, où une distance d'une extrémité sur le côté extérieur de la partie en retrait (9) dans la direction radiale de pneu jusqu'à la surface de bande de roulement, de la rainure circonférentielle (3, 4, 5) dont la paroi de rainure (10) est pourvue de la partie en retrait (9) qui est en retrait extérieur dans la direction de la largeur de rainure par rapport au bord de rainure (2) apparaissant sur la surface au sol de la partie bande de roulement (1), est désignée par L.
